# EUROPEAN PATENT SPECIFICATION

(11) **EP 2 950 520 B1**
(45) Date of publication and mention of the grant of the patent: **07.12.2022**
(21) Application number: 13880433.1
(22) Date of filing: 28.10.2013
(51) Int. Cl.: H04N 5/232, H04N 1/00

(54) **METHOD AND APPARATUS FOR OUTPUTTING PICTURE**
VERFAHREN UND VORRICHTUNG ZUR AUSGABE VON BILDERN
PROCÉDÉ ET APPAREIL POUR PRODUIRE UNE IMAGE

(30) Priority: 27.03.2013 CN 201310101209
(43) Date of publication of application: 02.12.2015
(73) Proprietor: Huawei Device Co., Ltd., Dongguan, Guangdong 523808 (CN)
(72) Inventor: WU, Lei, Shenzhen, Guangdong 518129 (CN)
(74) Representative: Maiwald GmbH
(86) International application number: PCT/CN2013/086054
(87) International publication number: WO 2014/153956

(56) References cited:
- EP-A1- 1 998 556
- CN-A- 101 510 934
- CN-A- 101 917 548
- CN-A- 102 891 958
- CN-A- 103 220 466
- JP-A- 2009 088 710
- US-A1- 2005 088 542
- US-A1- 2010 149 343
- US-A1- 2010 245 610
- US-A1- 2011 026 837
- US-A1- 2011 090 390

## Description

### TECHNICAL FIELD

The present invention relates to the communications field, and in particular, to a picture outputting method and apparatus.

### BACKGROUND

A camera is already capable of making precise determining on a photographed face, and can detect a location of the face, the number of persons, whether a smile is on the face, and whether eyes are closed. Now, modes, such as smile photographing and open-eye photographing, are commonly used in a digital camera. In such modes, even if a shutter is pressed, the camera can also intelligently take a photo only when it is detected that there is a smiling face or eyes are not closed. However, in current photographing technologies, an image recognition function of a camera is only used for focusing and smart adjustment of photographing time.

US 2011/090390 A1 (NARITA TOMOYA [JP]) 21 April 2011 (2011-04-21) describes an information processing apparatus that includes a captured image acquisition unit, a recommended composition acquisition unit, and a control unit. The captured image acquisition unit acquires captured image data, a subject recognition unit that recognizes a subject of a captured image based on the captured image data. The recommended composition acquisition unit acquires recommended composition data representing a recommended composition of the subject.

US 2010/245610 A1 (AHN HYUNSANG [KR] ET AL) 30 September 2010 (2010-09-30) describes a digital image photographing method that includes: recognizing a subject by analyzing an image photographed by a digital image photographing apparatus; separating the recognized subject from a background in the image; and displaying a recommending lead line of a rule of thirds on a display of the digital image photographing apparatus to help position the recognized subject on an intersection point of transversal and vertical trisectional lines

US 2011/026837 A1 (KITA KAZUNORI [JP]) 3 February 2011 (2011-02-03) describes an image processing device capable of capturing an image of various objects and common scenes with ideal compositions and attractive compositions.

US 2010/149343 A1 (KIM HOE-WON [KR] ET AL) 17 June 2010 (2010-06-17) describes a photographing method and apparatus using face pose estimation. The photographing method includes: detecting a face area from an input image; estimating pose information in the detected face area; and determining a face direction based on the estimated pose information and recording the input image according to the face

EP 1 998 556 A1 (SAMSUNG ELECTRONICS CO LTD [KR]) 3 December 2008 (2008-12-03) describes an image processing method for displaying a capture guide on a mobile's phone preview screen, wherein the image processing method involves capturing an image when the image displayed on the preview screen corresponds to the capture guide.

### SUMMARY

Embodiments of the present invention provide a picture outputting method and apparatus according to the appended claims which can output a superb photographic pose recommendation picture for a user.

### BRIEF DESCRIPTION OF DRAWINGS

FIG. 1 is a schematic flowchart of Embodiment 1 of a picture outputting method according to the present invention;
FIG. 2 is a schematic diagram of an embodiment of principles of dividing a face location scope according to the present invention;
FIG. 2.1 is a schematic diagram of another embodiment of principles of dividing a face location scope according to the present invention;
FIG. 3 is a schematic diagram of an embodiment of principles of representing a face size according to the present invention;
FIG. 4 is a schematic diagram of an embodiment of photographing data collected by a camera according to the present invention;
FIG. 5 is a schematic expression diagram of an embodiment of a photographic pose recommendation picture according to the present invention;
FIG. 5.1 is a schematic diagram of a display effect of an output picture according to the present invention;
FIG. 6 is a schematic flowchart of Embodiment 2 of a picture outputting method according to the present invention;
FIG. 7 is a schematic diagram of an embodiment of photographing data collected by a camera according to the present invention;
FIG. 8 is a schematic diagram of an embodiment of photographing data collected by a camera according to the present invention;
FIG. 9 is a schematic diagram of an embodiment of a photographic pose recommendation picture according to the present invention;
FIG. 10 is a schematic diagram of an embodiment of a photographic pose recommendation picture according to the present invention;
FIG. 10.1 is a schematic flowchart of Embodiment 2 of a picture outputting method according to the present invention;
FIG. 11 is a schematic flowchart of Embodiment 3 of a picture outputting method according to the present invention;
FIG. 12 is a schematic flowchart of Embodiment 4 of a picture outputting method according to the present invention;
FIG. 13 is a schematic diagram of structural composition of an embodiment of a picture outputting apparatus according to the present invention;
FIG. 14 is a schematic diagram of structural composition of an embodiment of a matching module according to the present invention;
FIG. 15 is a schematic diagram of structural composition of an embodiment of a matching module according to the present invention;
FIG. 16 is a schematic diagram of structural composition of an embodiment of a matching module according to the present invention; and
FIG. 17 is a schematic diagram of structural composition of an embodiment of a picture outputting apparatus according to the present invention.

### DESCRIPTION OF EMBODIMENTS

To make the objectives, technical solutions, and advantages of the present invention clearer, the following further describes the present invention in detail with reference to the accompanying drawings.

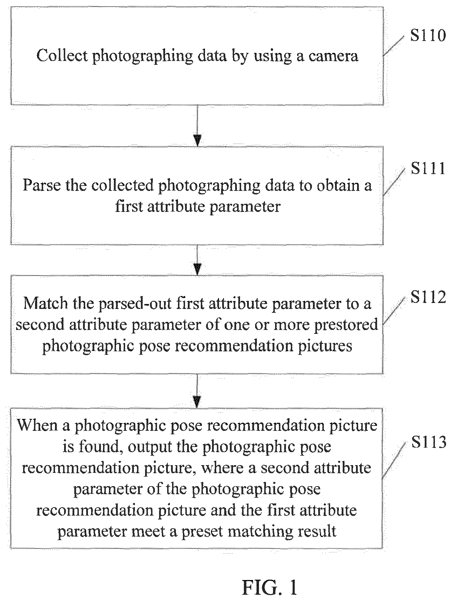

FIG. 1 is a schematic flowchart of Embodiment 1 of a picture outputting method according to the present invention. As shown in FIG. 1, the method may include the following steps:
Step S110: Collect photographing data by using a camera.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the camera.

Step Sill: Parse the collected photographing data to obtain a first attribute parameter.

In some feasible implementation manners, the first attribute parameter includes the number of faces and the location of a face on the screen that are collected by the camera. In some other embodiments, the attribute parameter may further include a size of a face in each location and/or a facial angle in each location, and the like.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

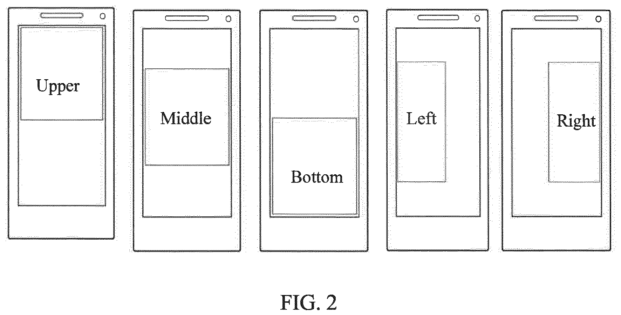

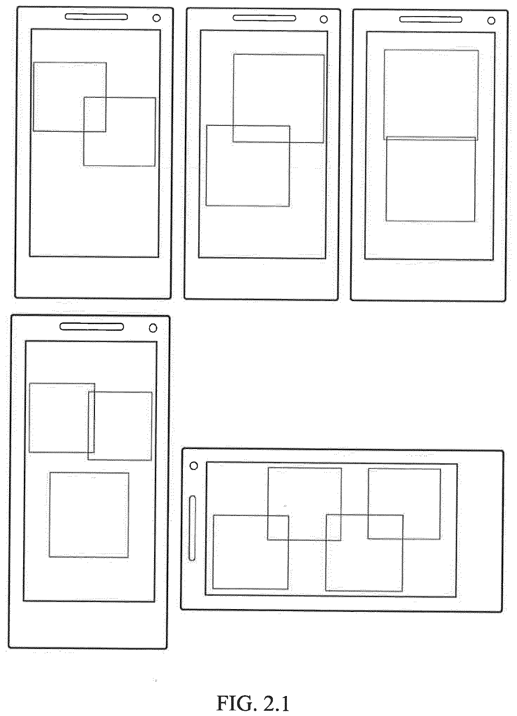

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2), or more detailed areas shown by boxes in FIG. 2.1. In another feasible implementation manner, in the first attribute parameter and/or the second attribute parameter, the location of a face on the screen may be specific location coordinates.

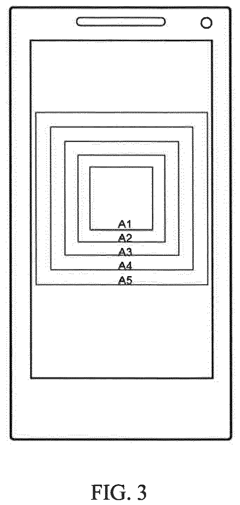

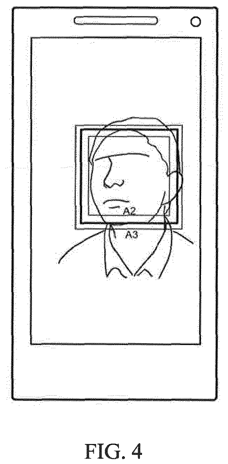

Correspondingly, in some feasible implementation manners, in the first attribute parameter and/or the second attribute parameter, the size of a face in each location may be represented by an interval range of the screen. For example, when the location of a face on the screen is a location scope of a divided area, each area of the screen is divided into boxes of multiple sizes, and each box represents an interval range. In this way, a box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, in the first attribute parameter and/or the second attribute parameter, the size of a face in each location may also be represented by parameters, such as actual length, width, and height.

In some feasible implementation manners, in the first attribute parameter and/or the second attribute parameter, the facial angle in each location may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

Step S112: Match the parsed-out first attribute parameter to a second attribute parameter of one or more prestored photographic pose recommendation pictures.

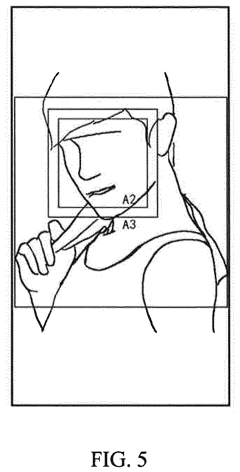

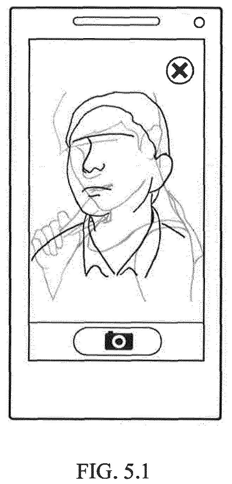

In specific implementation, different matching rules may be set according to different parameter content that is specifically included in the first attribute parameter and the second attribute parameter. A matching sequence of attribute parameter matching and a specific parameter that needs to be matched in step S 112 may be different, and standards for determining whether a preset matching result is met may also be different. For example, when the first attribute parameter and the second attribute parameter include the number of faces and the location of a face on a screen that are collected by the camera, parameters that need to be matched are only the number of faces and the location of a face on the screen. If the number of faces included in the photographing data is the same as the number of faces included in a photographic pose recommendation picture, and if a location of each face in the photographing data is also the same as a location of each face in the photographic pose recommendation picture, it may be determined that a photographic pose recommendation picture is found, where a second attribute parameter of the photographic pose recommendation picture and the first attribute parameter obtained by parsing the photographing data meet a preset matching result. However, when the first attribute parameter and the second attribute parameter include the number of faces, the location of a face on a screen, and the size of a face in each location that are collected by the camera, parameters that need to be matched in step S112 are also the three. If the number of faces included in the photographing data is the same as the number of faces included in a photographic pose recommendation picture, the location of each face in the photographing data is also the same as a location of each face in the photographic pose recommendation picture, and the size of a face in each location in the photographing data is also the same as that in the photographic pose recommendation picture, it may be determined that a photographic pose recommendation picture is found, where a second attribute parameter of the photographic pose recommendation picture and the first attribute parameter obtained by parsing the photographing data meet a preset matching result. In specific implementation, when the location of a face on a screen in the first attribute parameter and/or the second attribute parameter is specific location coordinates, and when matching is performed between the first attribute parameter and the second attribute parameter with regard to the location of a face on the screen, sameness of the location may refer to sameness of specific location coordinates; when the location of a face on a screen in the first attribute parameter and/or the second attribute parameter is a location scope, and when matching is performed between the first attribute parameter and the second attribute parameter with regard to the location of a face on the screen, sameness of the location may refer to being in a same location scope, for example, corresponding to FIG. 2, both being located on the left side, the right side, or the like of the screen. In specific implementation, when the size of a face in each location is represented by an interval range of the screen, and when matching is performed between the first attribute parameter and the second attribute parameter with regard to the size of a face in each location, sameness of the size may refer to being located in a same interval range of the screen. For example, corresponding to FIG. 4 (photographing data collected by the camera) and FIG. 5 (a prestored photographic pose recommendation picture), sameness of the size may refer to being located in a same interval in which the size is greater than A2 but less than A3. When the size of a face in each location is represented by parameters, such as actual length and width or height, and when matching is performed between the first attribute parameter and the second attribute parameter with regard to the size of a face in each location, sameness of the size may refer to sameness of length and width or height.

Step S113: When a photographic pose recommendation picture is found, output the photographic pose recommendation picture, so that a user adjusts a photographic pose according to the photographic pose recommendation picture, where a second attribute parameter of the photographic pose recommendation picture and the first attribute parameter meet a preset matching result.

In some feasible implementation manners, In step S113, the photographic pose recommendation picture may be superimposed in a semitransparent manner on the photographing data collected by the camera (as shown in FIG. 5.1, the frontal face is the photographing data collected by the camera, and the profile face is the photographic pose recommendation picture). On one hand, interference caused by the photographic pose recommendation picture to the photographing data collected by the camera can be reduced; on the other hand, it is convenient for the user to adjust his/her photographic pose by comparing the two pictures.

In some feasible implementation manners, multiple photographic pose recommendation pictures may meet the matching result. Therefore, in step S113, when multiple photographic pose recommendation pictures of which attribute parameters match the attribute parameter of the photographing data are found, one found photographic pose recommendation picture may be randomly output.

It can be seen from the foregoing that, in some feasible implementation manners, photographing data is collected by using a camera; the collected photographing data is parsed to obtain a first attribute parameter, where the first attribute parameter includes the number of faces and a location of a face on a screen; matching is performed between the parsed-out first attribute parameter and a second attribute parameter of one or more prestored photographic pose recommendation pictures; and when a photographic pose recommendation picture is found, the photographic pose recommendation picture is output, so that a user adjusts a photographic pose according to the photographic pose recommendation picture, where a second attribute parameter of the photographic pose recommendation picture and the first attribute parameter meet a preset matching result. In this way, a superb photographic pose recommendation picture can be output for a user.

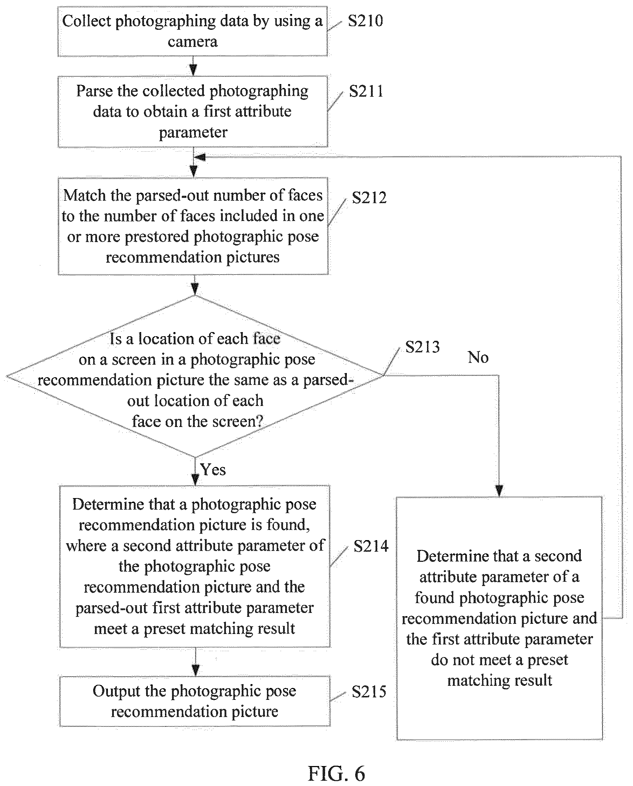

FIG. 6 is a schematic flowchart of Embodiment 2 of a picture outputting method according to the present invention. As shown in FIG. 6, the method may include the following steps:
Step S210: Collect photographing data by using a camera.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the camera.

Step S211: Parse the collected photographing data to obtain a first attribute parameter, where the first attribute parameter includes the number of faces and a location of a face on a screen that are collected by the camera.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2), or divided into other areas (for example, those shown in FIG. 2.1). In another feasible implementation manner, the location of a face on the screen may be specific location coordinates.

In some feasible implementation manners, in the first attribute parameter and/or the second attribute parameter, the size of a face in each location may be represented by an interval range of the screen. For example, when the location of a face on the screen is an area, each area of the screen is divided into boxes of multiple sizes in the area scope by using boxes, and each box represents an interval range. A box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, the size of a face in each location may also be represented by parameters, such as actual length, width, and height. The facial angle may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

Step S212: Match the parsed-out number of faces to the number of faces included in one or more prestored photographic pose recommendation pictures.

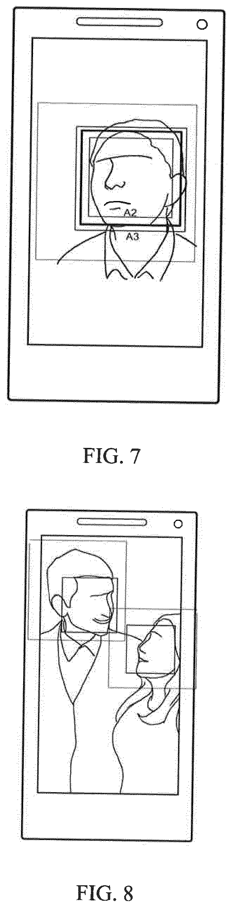

In specific implementation, the number of faces collected by the camera may be one or more. For example, FIG. 7 shows a viewfinder frame in which the camera collects a single face; and FIG. 8 shows a viewfinder frame in which the camera collects two faces. With reference to FIG. 7 and FIG. 8, in step S212, matching is performed to determine whether there is a photographic pose recommendation picture including a single face or two faces.

Step S213: When a photographic pose recommendation picture in which the number of included faces is the same as the parsed-out number of faces is found, determine whether a location of each face on the screen in the photographic pose recommendation picture is the same as the parsed-out location of each face on the screen; if a determining result is that the location of each face on the screen in the photographic pose recommendation picture is the same as the parsed-out location of each face on the screen, perform step S214.

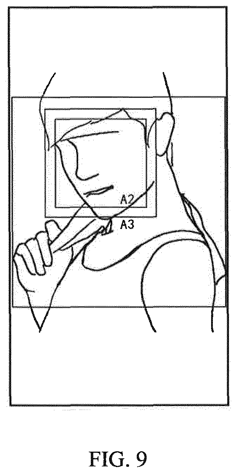

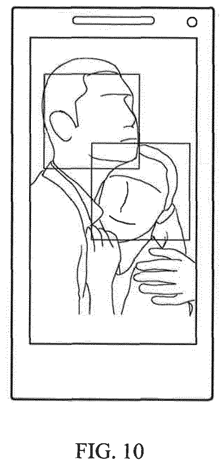

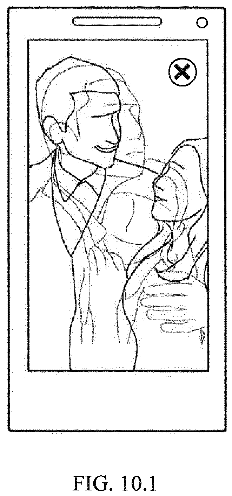

With reference to instances in FIG. 7 and FIG. 8, after a photographic pose recommendation picture including a single face or two faces is found in step S212, the photographic pose recommendation picture corresponding to a single face is shown in FIG. 9, and the photographic pose recommendation picture corresponding to two faces is shown in FIG. 10. Therefore, in step S213, it may be further determined whether the location of a face on the screen in FIG. 9 is the same as the location of a face on the screen in FIG. 7, and it may be determined whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7. Therefore, in step S214, for the photographing data in FIG. 7, it may be determined that a photographic pose recommendation picture is found, where a second attribute parameter of the photographic pose recommendation picture and the first attribute parameter obtained by parsing the photographing data meet a preset matching result.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is that all prestored photographic pose recommendation pictures have not been traversed, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8. Therefore, in step S214, for the photographing data in FIG. 8, it may be determined that a photographic pose recommendation picture shown in FIG. 10 is found, where a second attribute parameter of the photographic pose recommendation picture and the first attribute parameter obtained by parsing the photographing data meet a preset matching result.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Step S214: Determine that a photographic pose recommendation picture is found, where a second attribute parameter of the photographic pose recommendation picture and the parsed-out first attribute parameter meet a preset matching result.

Step S215: When the photographic pose recommendation picture is found, output the photographic pose recommendation picture, where the second attribute parameter of the photographic pose recommendation picture and the parsed-out first attribute parameter meet the preset matching result.

In some feasible implementation manners, in step S215, the photographic pose recommendation picture may be superimposed in a semitransparent manner on the photographing data collected by the camera (as shown in FIG. 5.1, the frontal face is the photographing data collected by the camera, and the profile face is the photographic pose recommendation picture; as shown in FIG. 10.1, the two persons hugging and facing each other are a photographic pose recommendation picture). On one hand, interference caused by the photographic pose recommendation picture to the photographing data collected by the camera can be reduced; on the other hand, it is convenient for the user to adjust his/her photographic pose by comparing the two pictures.

In some feasible implementation manners, multiple photographic pose recommendation pictures may meet the matching result. Therefore, in step S215, when multiple photographic pose recommendation pictures of which second attribute parameters match the first attribute parameter are found, one found photographic pose recommendation picture may be randomly output.

It can be seen from the foregoing that, in some feasible implementation manners, photographing data is collected by using a camera; the collected photographing data is parsed to obtain a first attribute parameter, where the first attribute parameter includes the number of faces and a location of a face on a screen that are collected by the camera; matching is performed between the parsed-out first attribute parameter and a second attribute parameter of one or more prestored photographic pose recommendation pictures; and when a photographic pose recommendation picture of which a second attribute parameter matches the parsed-out first attribute parameter is found, the found photographic pose recommendation picture is output, so that a user adjusts a photographic pose according to the photographic pose recommendation picture. In this way, a superb photographic pose recommendation picture can be output for a user.

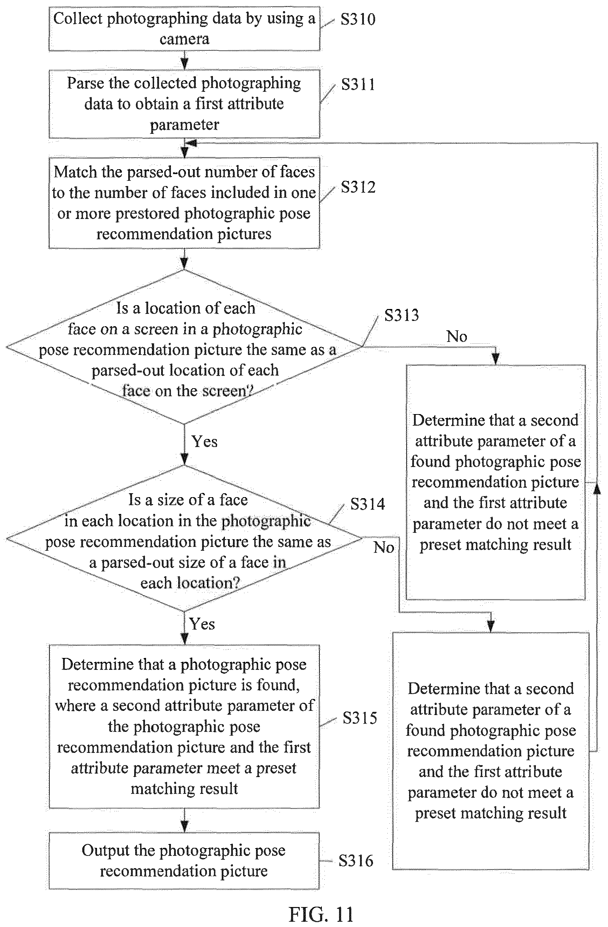

FIG. 11 is a schematic flowchart of Embodiment 3 of a picture outputting method according to the present invention. As shown in FIG. 11, the method may include the following steps:
Step S310: Collect photographing data by using a camera.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the camera.

Step S311: Parse the collected photographing data to obtain a first attribute parameter, where the first attribute parameter includes the number of faces, a location of a face on a screen, and a size of a face in each location that are collected by the camera.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2), or divided into other areas (for example, in FIG. 2.1, each box represents an area). In another feasible implementation manner, the location of a face on the screen may be specific location coordinates.

In some feasible implementation manners, in the first attribute parameter and/or the second attribute parameter, the size of a face in each location may be represented by an interval range of the screen. For example, when the location of a face on the screen is an area, each area of the screen is divided into boxes of multiple sizes in the area scope by using boxes, and each box represents an interval range. A box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, the size of a face in each location may also be represented by parameters, such as actual length, width, and height. The facial angle may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

Step S312: Match the parsed-out number of faces to the number of faces included in one or more prestored photographic pose recommendation pictures.

In specific implementation, the number of faces collected by the camera may be one or more. For example, FIG. 7 shows a viewfinder frame in which the camera collects a single face; and FIG. 8 shows a viewfinder frame in which the camera collects two faces. With reference to FIG. 7 and FIG. 8, in step S312, matching is performed to determine whether there is a photographic pose recommendation picture including a single face or two faces.

Step S313: When a photographic pose recommendation picture in which the number of included faces is the same as the parsed-out number of faces is found, determine whether a location of each face on the screen in the photographic pose recommendation picture is the same as the parsed-out location of each face on the screen; if a determining result is that the location of each face on the screen in the photographic pose recommendation picture is the same as the parsed-out location of each face on the screen, perform step S314.

With reference to instances in FIG. 7 and FIG. 8, after a photographic pose recommendation picture including a single face or two faces is found in step S312, the photographic pose recommendation picture corresponding to a single face is shown in FIG. 9, and the photographic pose recommendation picture corresponding to two faces is shown in FIG. 10. Therefore, in step S313, it may be further determined whether the location of a face on the screen in FIG. 9 is the same as the location of a face on the screen in FIG. 7, and it may be determined whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Step S314: Determine whether a size of a face in each location in the photographic pose recommendation picture is the same as the parsed-out size of a face in each location; if a determining result is that the size of a face in each location in the photographic pose recommendation picture is the same as the parsed-out size of a face in each location, perform step S315.

Referring to FIG. 3, FIG. 7 and FIG. 9, it can be learned that the size of a single face in FIG. 7 is greater than A2 but less than A3, and the size of a single face in FIG. 9 is also greater than A2 but less than A3. Therefore, in step S315, it may be determined that a photographic pose recommendation picture shown in FIG. 9 is found, where a second attribute parameter of the photographic pose recommendation picture and the first attribute parameter obtained by parsing the photographing data in FIG. 7 meet a preset matching result.

In specific implementation, it is also possible that the photographic pose recommendation picture in FIG. 9 meets a matching requirement of the number of faces and meets a matching requirement of the location but does not meet a face size requirement. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, it may be determined separately whether sizes of single faces in same locations are the same between FIG. 8 and FIG. 10. If the sizes of single faces are the same, then in step S315, it may be determined that a photographic pose recommendation picture is found, where an attribute parameter of the photographic pose recommendation picture and the attribute parameter of the photographing data in FIG. 8 meet a preset matching result. If it is determined that a size of a face in one location in FIG. 8 is the same as a size of a face in a same location in FIG. 10, but a size of a face in another location is different from a size of a face in a same location in FIG. 10, it may be determined that a photographic pose recommendation picture is not found, where an attribute parameter of the photographic pose recommendation picture and the attribute parameter of the photographing data in FIG. 8 meet a preset matching result.

In specific implementation, it is also possible that the photographic pose recommendation picture in FIG. 10 meets a matching requirement of the number of faces and meets a matching requirement of the location but does not meet a face size requirement. In this case, the system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Step S315: Determine that a photographic pose recommendation picture is found, where a second attribute parameter of the photographic pose recommendation picture and the parsed-out first attribute parameter meet a preset matching result.

Step S316: When the photographic pose recommendation picture is found, output the photographic pose recommendation picture, where the second attribute parameter of the photographic pose recommendation picture and the parsed-out first attribute parameter meet the preset matching result.

In some feasible implementation manners, in step S316, the photographic pose recommendation picture may be superimposed in a semitransparent manner on the photographing data collected by the camera (as shown in FIG. 5.1, the frontal face is the photographing data collected by the camera, and the profile face is the photographic pose recommendation picture). On one hand, interference caused by the photographic pose recommendation picture to the photographing data collected by the camera can be reduced; on the other hand, it is convenient for the user to adjust his/her photographic pose by comparing the two pictures.

In some feasible implementation manners, multiple photographic pose recommendation pictures may meet the matching result. Therefore, in step S316, when multiple photographic pose recommendation pictures of which second attribute parameters match the first attribute parameter obtained by parsing the photographing data are found, one found photographic pose recommendation picture may be randomly output.

It can be seen from the foregoing that, in some feasible implementation manners, photographing data is collected by using a camera; the collected photographing data is parsed to obtain a first attribute parameter, where the first attribute parameter includes the number of faces, a location of a face on a screen, and a size of a face in each location that are collected by the camera; matching is performed between the parsed-out first attribute parameter and a second attribute parameter of one or more prestored photographic pose recommendation pictures; and when a photographic pose recommendation picture of which a second attribute parameter matches the parsed-out first attribute parameter is found, the found photographic pose recommendation picture is output, so that a user adjusts a photographic pose according to the photographic pose recommendation picture. In this way, a superb photographic pose recommendation picture can be output for a user.

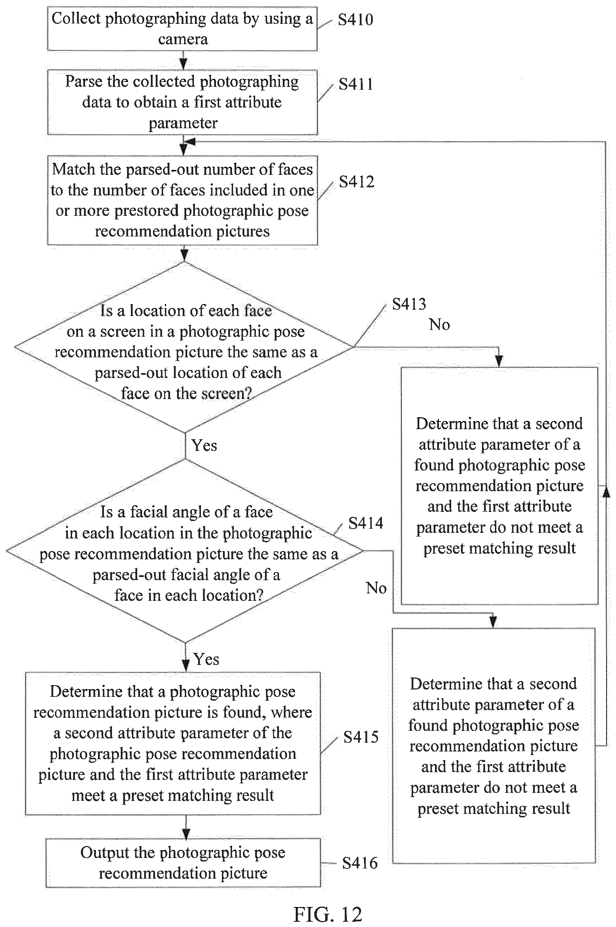

FIG. 12 is a schematic flowchart of Embodiment 4 of a picture outputting method according to the present invention. As shown in FIG. 12, the method may include the following steps:
Step S410: Collect photographing data by using a camera.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the camera.

Step S411: Parse the collected photographing data to obtain a first attribute parameter, where the first attribute parameter includes the number of faces, a location of a face on a screen, and a facial angle in each location that are collected by the camera.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2), or divided into other areas (for example, in FIG. 2.1, each box represents an area). In another feasible implementation manner, the location of a face on the screen may be specific location coordinates.

In some feasible implementation manners, in the first attribute parameter and/or the second attribute parameter, the size of a face in each location may be represented by an interval range of the screen. For example, when the location of a face on the screen is an area, each area of the screen is divided into boxes of multiple sizes in the area scope by using boxes, and each box represents an interval range. A box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, the size of a face in each location may also be represented by parameters, such as actual length, width, and height. The facial angle may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

Step S412: Match the parsed-out number of faces to the number of faces included in one or more prestored photographic pose recommendation pictures.

In specific implementation, the number of faces collected by the camera may be one or more. For example, FIG. 7 shows a viewfinder frame in which the camera collects a single face; and FIG. 8 shows a viewfinder frame in which the camera collects two faces. With reference to FIG. 7 and FIG. 8, in step S412, matching is performed to determine whether there is a photographic pose recommendation picture including a single face or two faces.

Step S413: When a photographic pose recommendation picture in which the number of included faces is the same as the parsed-out number of faces is found, determine whether a location of each face on the screen in the photographic pose recommendation picture is the same as the parsed-out location of each face on the screen; if a determining result is that the location of each face on the screen in the photographic pose recommendation picture is the same as the parsed-out location of each face on the screen, perform step S414.

With reference to instances in FIG. 7 and FIG. 8, after a photographic pose recommendation picture including a single face or two faces is found in step S412, the photographic pose recommendation picture corresponding to a single face is shown in FIG. 9, and the photographic pose recommendation picture corresponding to two faces is shown in FIG. 10. Therefore, in step S413, it may be further determined whether the location of a face on the screen in FIG. 9 is the same as the location of a face on the screen in FIG. 7, and it may be determined whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Step S414: Determine whether a facial angle in each location in the photographic pose recommendation picture is the same as the parsed-out facial angle in each location; if a determining result is that the facial angle in each location in the photographic pose recommendation picture is the same as the parsed-out facial angle in each location, perform step S415.

Referring to FIG. 7 and FIG. 9, it can be learned that the angle of a single face in FIG. 7 is frontal and the angle of a single face in FIG. 9 is 0-45° right profile, and therefore, it may be determined that the second attribute parameter of the photographic pose recommendation picture in FIG. 9 and the first attribute parameter obtained by parsing the photographing data in FIG. 7 do not meet a preset matching result.

In specific implementation, it is also possible that the photographic pose recommendation picture in FIG. 9 meets a matching requirement of the number of faces and meets a matching requirement of the location but does not meet a matching requirement of the facial angle. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, it may be determined separately whether facial angles of single faces in same location are the same between FIG. 8 and FIG. 10. If the facial angles of single faces are the same, in step S415, it may be determined that a photographic pose recommendation picture is found, where an attribute parameter of the photographic pose recommendation picture and the attribute parameter of the photographing data in FIG. 8 meet a preset matching result. If it is determined that a facial angle in one location in FIG. 8 is the same as a facial angle in a same location in FIG. 10, but a facial angle in another location is different from a facial angle in a same location in FIG. 10, it may be determined that the attribute parameter of the photographic pose recommendation picture in FIG. 10 and the attribute parameter of the photographing data in FIG. 8 do not meet a preset matching result.

In specific implementation, it is also possible that the photographic pose recommendation picture in FIG. 10 meets a matching requirement of the number of faces and meets a matching requirement of the location but does not meet a matching requirement of the facial angle. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Step S415: Determine that a photographic pose recommendation picture is found, where a second attribute parameter of the photographic pose recommendation picture and the parsed-out attribute parameter meet a preset matching result.

Step S416: When the photographic pose recommendation picture is found, output the photographic pose recommendation picture, where the second attribute parameter of the photographic pose recommendation picture and the parsed-out first attribute parameter meet the preset matching result.

In some feasible implementation manners, In step S416, the photographic pose recommendation picture may be superimposed in a semitransparent manner on the photographing data collected by the camera (as shown in FIG. 5.1, the frontal face is the photographing data collected by the camera, and the profile face is the photographic pose recommendation picture). On one hand, interference caused by the photographic pose recommendation picture to the photographing data collected by the camera can be reduced; on the other hand, it is convenient for the user to adjust his/her photographic pose by comparing the two pictures.

In some feasible implementation manners, multiple photographic pose recommendation pictures may meet the matching result. Therefore, in step S416, when multiple photographic pose recommendation pictures of which attribute parameters match the attribute parameter of the photographing data are found, one found photographic pose recommendation picture may be randomly output.

It can be seen from the foregoing that, in some feasible implementation manners, photographing data is collected by using a camera; the collected photographing data is parsed to obtain a first attribute parameter, where the first attribute parameter includes the number of faces, a location of a face on a screen, and a size of a face in each location that are collected by the camera; matching is performed between the parsed-out first attribute parameter and a second attribute parameter of one or more prestored photographic pose recommendation pictures; and when a photographic pose recommendation picture of which a second attribute parameter matches the first attribute parameter obtained by parsing the photographing data is found, the found photographic pose recommendation picture is output, so that a user adjusts a photographic pose according to the photographic pose recommendation picture. In this way, a superb photographic pose recommendation picture can be output for a user.

Correspondingly, the present invention further provides an apparatus embodiment that may be used to implement the foregoing method embodiments.

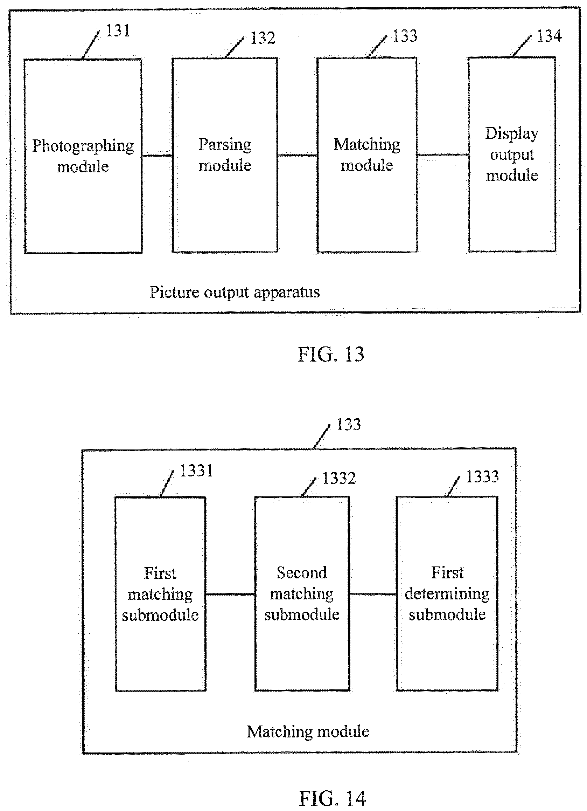

FIG. 13 is a schematic diagram of structural composition of Embodiment 1 of a picture outputting apparatus (in specific implementation, the picture outputting apparatus may be an apparatus that provides a photographing function, such as a camera) according to the present invention. As shown in FIG. 13, the picture outputting apparatus may include: a photographing module 131 (which, in specific implementation, may be a video collecting apparatus such as a camera), a parsing module 132, a matching module 133, and a display output module 134, where:
the photographing module 131 is configured to collect photographing data;
the parsing module 132 is configured to parse the photographing data collected by the photographing module 131 to obtain a first attribute parameter, where the first attribute parameter includes the number of faces and a location of a face on a screen that are collected by the photographing module;
the matching module 133 is configured to match the first attribute parameter parsed out by the parsing module 132 to a second attribute parameter of one or more prestored photographic pose recommendation pictures; and
the display output module 134 is configured to: when the matching module 133 finds a photographic pose recommendation picture, output the found photographic pose recommendation picture, so that a user adjusts a photographic pose according to the photographic pose recommendation picture, where a second attribute parameter of the photographic pose recommendation picture and the parsed-out first attribute parameter meet a preset matching result.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the photographing module 131. Therefore, the parsing module 132 may parse the photographing data collected by the photographing module to obtain the corresponding first attribute parameter. In some feasible implementation manners, the first attribute parameter includes the number of faces and the location of a face on the screen that are collected by the photographing module. In some other embodiments, the first attribute parameter may further include a size of a face in each location and/or a facial angle in each location, and the like.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2). In another feasible implementation manner, the location of a face on the screen may be specific location coordinates.

Correspondingly, in some feasible implementation manners, in the first attribute parameter and/or the second attribute parameter, the size of a face in each location may be represented by an interval range of the screen. For example, when the location of a face on the screen is a location scope of a divided area, each area of the screen is divided into boxes of multiple sizes, and each box represents an interval range. In this way, a box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, the size of a face in each location may also be represented by parameters, such as actual length, width, and height.

Correspondingly, in the first attribute parameter and/or the second attribute parameter, the facial angle in each location may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

The matching module 133 may match the first attribute parameter parsed out by the parsing module 132 to the second attribute parameter of the one or more prestored photographic pose recommendation pictures. In specific implementation, different matching rules may be set according to different parameter content that is specifically included in the first attribute parameter and the second attribute parameter. A matching sequence of attribute parameter matching performed by the matching module 133 and a specific parameter that needs to be matched may be different, and standards for determining whether the preset matching result is met may also be different. For example, when the first attribute parameter and the second attribute parameter include the number of faces and the location of a face on a screen that are collected by the photographing module, parameters that need to be matched are only the number of faces and the location of a face on the screen. If the number of faces included in the photographing data is the same as the number of faces included in a photographic pose recommendation picture, and if a location of each face in the photographing data is also the same as a location of each face in the photographic pose recommendation picture, it may be determined that a photographic pose recommendation picture is found, where a second attribute parameter of the photographic pose recommendation picture and the first attribute parameter obtained by parsing the photographing data meet a preset matching result. However, when the first attribute parameter and the second attribute parameter include the number of faces, the location of a face on a screen, and the size of a face in each location that are collected by the photographing module, parameters that need to be matched by the matching module 133 are also the three. If the number of faces included in the photographing data is the same as the number of faces included in a photographic pose recommendation picture, the location of each face in the photographing data is also the same as a location of each face in the photographic pose recommendation picture, and the size of a face in each location in the photographing data is also the same as that in the photographic pose recommendation picture, it may be determined that a photographic pose recommendation picture is found, where a second attribute parameter of the photographic pose recommendation picture and the first attribute parameter obtained by parsing the photographing data meet a preset matching result. When the location of a face on a screen in the first attribute parameter and/or the second attribute parameter is specific location coordinates, and when matching is performed between the first attribute parameter and the second attribute parameter with regard to the location of a face on the screen, sameness of the location may refer to sameness of specific location coordinates; when the location of a face on a screen in the first attribute parameter and/or the second attribute parameter is a location scope, and when matching is performed between the first attribute parameter and the second attribute parameter with regard to the location of a face on the screen, sameness of the location may refer to being in a same location scope, for example, corresponding to FIG. 2, both being located on the left side, the right side, or the like of the screen. In specific implementation, when the size of a face in each location is represented by an interval range of the screen, and when matching is performed between the first attribute parameter and the second attribute parameter with regard to the size of a face in each location, sameness of the size may refer to being located in a same interval range of the screen. For example, corresponding to FIG. 4 (photographing data collected by the photographing module) and FIG. 5 (a prestored photographic pose recommendation picture), sameness of the size may refer to being located in a same interval in which the size is greater than A2 but less than A3. When the size of a face in each location is represented by parameters, such as actual length and width or height, and when matching is performed between the first attribute parameter and the second attribute parameter with regard to the size of a face in each location, sameness of the size may refer to sameness of length and width or height.

In some feasible implementation manners, the display output module 134 may superimpose the photographic pose recommendation picture in a semitransparent manner on the photographing data collcctcd by the photographing module (as shown in FIG. 5.1, the frontal face is the photographing data collected by the photographing module, and the profile face is the photographic pose recommendation picture). On one hand, interference caused by the photographic pose recommendation picture to the photographing data collected by the photographing module can be reduced; on the other hand, it is convenient for the user to adjust his/her photographic pose by comparing the two pictures.

In some feasible implementation manners, multiple photographic pose recommendation pictures may meet the matching result. Therefore, when multiple photographic pose recommendation pictures of which attribute parameters match the attribute parameter of the photographing data are found, the display output module 134 may randomly output one found photographic pose recommendation picture.

It can be seen from the foregoing that, in some feasible implementation manners, photographing data is collected by using a photographing module; the collected photographing data is parsed to obtain a first attribute parameter, where the first attribute parameter includes the number of faces and a location of a face on a screen; matching is performed between the parsed-out first attribute parameter and a second attribute parameter of one or more prestored photographic pose recommendation pictures; and when a photographic pose recommendation picture is found, the photographic pose recommendation picture is output, so that a user adjusts a photographic pose according to the photographic pose recommendation picture, where a second attribute parameter of the photographic pose recommendation picture and the first attribute parameter meet a preset matching result. In this way, a superb photographic pose recommendation picture can be output for a user.

Further, referring to FIG. 14, as a feasible implementation manner, the matching module 133 in the present invention may include a first matching submodule 1331, a second matching submodule 1332, and a first determining submodule 1333.

The first matching submodule 1331 is configured to match the number of faces that is parsed out by the parsing module 132 to the number of faces included in the one or more prestored photographic pose recommendation pictures.

In specific implementation, the number of faces collected by the photographing module 131 may be one or more. For example, FIG. 7 shows a viewfinder frame in which the camera collects a single face; and FIG. 8 shows a viewfinder frame in which the camera collects two faces. With reference to FIG. 7 and FIG. 8, the first matching submodule 1331 performs matching to determine whether there is a photographic pose recommendation picture including a single face or two faces. After the photographic pose recommendation picture including a single face or two faces is found, corresponding to the single face in FIG. 7, the photographic pose recommendation picture in FIG. 9 is found, and corresponding to the two faces in FIG. 8, the photographic pose recommendation picture in FIG. 10 is found.

The second matching submodule 1332 is configured to: when the first matching submodule 1331 finds a photographic pose recommendation picture in which the number of included faces is the same as the number of faces that is parsed out by the parsing module 132, determine whether a location of each face on the screen in the photographic pose recommendation picture is the same as the location that is of a face on the screen and parsed out by the parsing module 132.

The first determining submodule 1333 is configured to: when a determining result of the second matching submodule is that the location of each face on the screen in the photographic pose recommendation picture is the same as the location that is of a face on the screen and parsed out by the parsing module 132, determine that a photographic pose recommendation picture is found, where a second attribute parameter of the photographic pose recommendation picture and the first attribute parameter parsed out by the parsing module 132 meet a preset matching result.

Still referring to the examples in FIG. 7 and FIG. 8, the second matching submodule 1332 may further determine whether the location of a face on the screen in FIG. 9 is the same as the location of a face on the screen in FIG. 7, and may determine whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7. Therefore, for the photographing data in FIG. 7, the first determining submodule 1333 may determine that a photographic pose recommendation picture is found, where a second attribute parameter of the photographic pose recommendation picture and the first attribute parameter obtained by parsing the photographing data meet a preset matching result.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8. Therefore, for the photographing data in FIG. 8, the first determining submodule 1333 may determine that a photographic pose recommendation picture is found, where a second attribute parameter of the photographic pose recommendation picture and the first attribute parameter obtained by parsing the photographing data meet a preset matching result.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

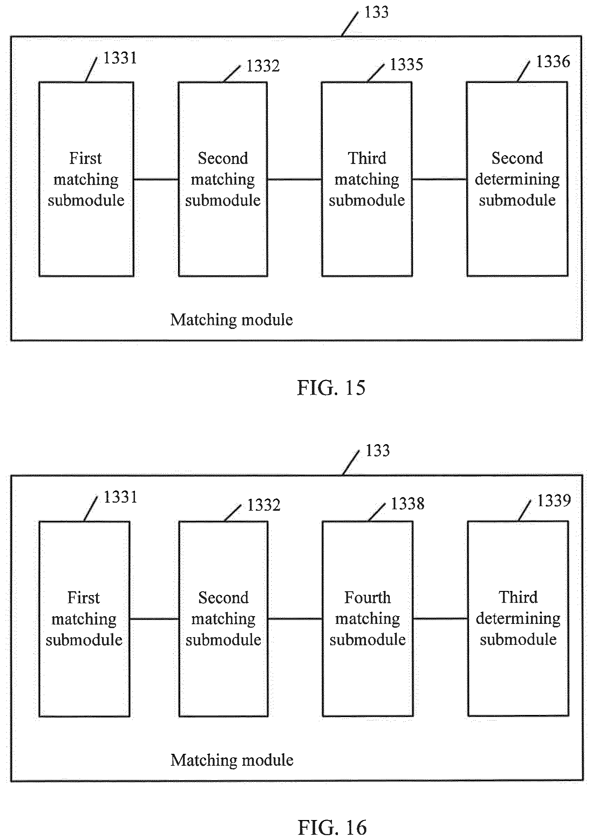

Further, referring to FIG. 15, as a feasible implementation manner, the matching module 133 in the present invention may include a first matching submodule 1331, a second matching submodule 1332, a third matching module 1335, and a second determining submodule 1336.

The first matching submodule 1331 is configured to match the number of faces that is parsed out by the parsing module 132 to the number of faces included in the one or more prestored photographic pose recommendation pictures.

In specific implementation, the number of faces collected by the photographing module 131 may be one or more. For example, FIG. 7 shows a viewfinder frame in which the camera collects a single face; and FIG. 8 shows a viewfinder frame in which the camera collects two faces. With reference to FIG. 7 and FIG. 8, the first matching submodule 1331 performs matching to determine whether there is a photographic pose recommendation picture including a single face or two faces. After the photographic pose recommendation picture including a single face or two faces is found, corresponding to the single face in FIG. 7, the photographic pose recommendation picture in FIG. 9 is found, and corresponding to the two faces in FIG. 8, the photographic pose recommendation picture in FIG. 10 is found.

The second matching submodule 1332 is configured to: when the first matching submodule 1331 finds a photographic pose recommendation picture in which the number of included faces is the same as the number of faces that is parsed out by the parsing module 132, determine whether a location of each face on the screen in the photographic pose recommendation picture is the same as the location that is of a face on the screen and parsed out by the parsing module 132.

Still referring to the examples in FIG. 7 and FIG. 8, the second matching submodule 1332 may further determine whether the location of a face on the screen in FIG. 9 is the same as the location of a face on the screen in FIG. 7, and may determine whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

The third matching module 1335 is configured to: when a determining result of the second matching submodule 1332 is that the location of each face on the screen in the photographic pose recommendation picture is the same as the location that is of a face on the screen and parsed out by the parsing module 132, determine whether a size of a face in each location in the photographic pose recommendation picture is the same as the size that is of a face in each location and parsed out by the parsing module 132.

The second determining submodule 1336 is configured to: when a determining result of the third matching module 1335 is that the size of a face in each location in the photographic pose recommendation picture is the same as the size that is of a face in each location and parsed out by the parsing module 132, determine that a photographic pose recommendation picture is found, where a second attribute parameter of the photographic pose recommendation picture and the first attribute parameter parsed out by the parsing module 132 meet a preset matching result.

Referring to FIG. 3, FIG. 7 and FIG. 9, it can be learned that, after the matching is performed by the third matching module 1335, the size of a single face in FIG. 7 is greater than A2 but less than A3, and the size of a single face in FIG. 9 is also greater than A2 but less than A3. Therefore, the second determining submodule 1336 may determine that a photographic pose recommendation picture shown in FIG. 9 is found, where an attribute parameter of the photographic pose recommendation picture and the attribute parameter of the photographing data in FIG. 7 meet a preset matching result.

In specific implementation, it is also possible that the photographic pose recommendation picture in FIG. 9 meets a matching requirement of the number of faces and meets a matching requirement of the location but does not meet a matching requirement of the size of a face. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, the third matching module 1335 may determine separately whether sizes of single faces in same locations are the same between FIG. 8 and FIG. 10. If the sizes of single faces are the same, then the second determining submodule 1336 may determine that a photographic pose recommendation picture is found, where an attribute parameter of the photographic pose recommendation picture and the attribute parameter of the photographing data in FIG. 8 meet a preset matching result. If it is determined that a size of a face in one location in FIG. 8 is the same as a size of a face in a same location in FIG. 10, but a size of a face in another location is different from a size of a face in a same location in FIG. 10, it may be determined that the second attribute parameter of the photographic pose recommendation picture in FIG. 10 and the first attribute parameter obtained by parsing the photographing data in FIG. 8 do not meet a preset matching result.

In specific implementation, it is also possible that the photographic pose recommendation picture in FIG. 10 meets a matching requirement of the number of faces and meets a matching requirement of the location but does not meet a face size requirement. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Further, referring to FIG. 16, as a feasible implementation manner, the matching module 133 in the present invention may include a first matching submodule 1331, a second matching submodule 1332, a fourth matching submodule 1338, and a third determining submodule 1339.

The first matching submodule 1331 is configured to match the number of faces that is parsed out by the parsing module 132 to the number of faces included in the one or more prestored photographic pose recommendation pictures.

In specific implementation, the number of faces collected by the photographing module 131 may be one or more. For example, FIG. 7 shows a viewfinder frame in which the camera collects a single face; and FIG. 8 shows a viewfinder frame in which the camera collects two faces. With reference to FIG. 7 and FIG. 8, the first matching submodule 1331 performs matching to determine whether there is a photographic pose recommendation picture including a single face or two faces. After the photographic pose recommendation picture including a single face or two faces is found, corresponding to the single face in FIG. 7, the photographic pose recommendation picture in FIG. 9 is found, and corresponding to the two faces in FIG. 8, the photographic pose recommendation picture in FIG. 10 is found.

The second matching submodule 1332 is configured to: when the first matching submodule 1331 finds a photographic pose recommendation picture in which the number of included faces is the same as the number of faces that is parsed out by the parsing module 132, determine whether a location of each face on the screen in the photographic pose recommendation picture is the same as the location that is of a face on the screen and parsed out by the parsing module 132.

Still referring to the examples in FIG. 7 and FIG. 8, the second matching submodule 1332 may further determine whether the location of a face on the screen in FIG. 9 is the same as the location of a face on the screen in FIG. 7, and may determine whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

The fourth matching submodule 1338 is configured to: when a determining result of the second matching submodule 1332 is yes, determine whether a facial angle in each location in the photographic pose recommendation picture is the same as the facial angle that is of a face in each location and parsed out by the parsing module 132.

The third determining submodule 1339 is configured to: when a determining result of the fourth matching submodule 1338 is yes, determine that a photographic pose recommendation picture is found, where a second attribute parameter of the photographic pose recommendation picture and the first attribute parameter parsed out by the parsing module 132 meet a preset matching result.

Referring to FIG. 7 and FIG. 9, it can be learned that the angle of a single face in FIG. 7 is frontal and the angle of a single face in FIG. 9 is 0-45° right profile. According to determining of the facial angles of faces in FIG. 7 and FIG. 9, the fourth matching submodule 1338 may determine that the attribute parameter of the photographic pose recommendation picture in FIG. 9 and the attribute parameter of the photographing data in FIG. 7 do not meet a preset matching result.

In specific implementation, it is also possible that the photographic pose recommendation picture in FIG. 9 meets a matching requirement of the number of faces and meets a matching requirement of the location but does not meet a matching requirement of the facial angle. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, the fourth matching submodule 1338 may determine separately whether facial angles of single faces in same locations are the same between FIG. 8 and FIG. 10. If the facial angles of single faces are the same, the third determining submodule 1339 may determine that a photographic pose recommendation picture is found, where an attribute parameter of the photographic pose recommendation picture and the attribute parameter of the photographing data in FIG. 8 meet a preset matching result. If it is determined that a facial angle in one location in FIG. 8 is the same as a facial angle in a same location in FIG. 10, but a facial angle in another location is different from a facial angle in a same location in FIG. 10, it may be determined that the second attribute parameter of the photographic pose recommendation picture in FIG. 10 and the first attribute parameter obtained by parsing the photographing data in FIG. 8 do not meet a preset matching result.

In specific implementation, it is also possible that the photographic pose recommendation picture in FIG. 10 meets a matching requirement of the number of faces and meets a matching requirement of the location but does not meet a matching requirement of the facial angle. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

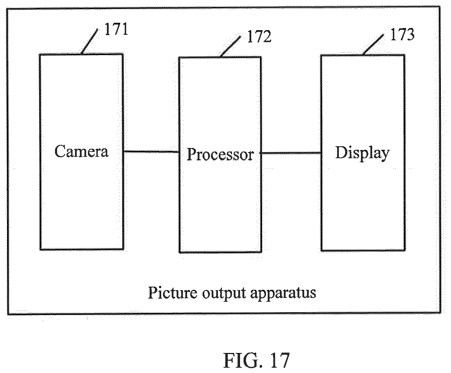

FIG. 17 is a schematic diagram of structural composition of Embodiment 2 of a picture outputting apparatus (in specific implementation, the picture outputting apparatus may be an apparatus that provides a photographing function, such as a camera) according to the present invention. As shown in FIG. 17, the picture outputting apparatus may include a camera 171, a processor 172, and a display 173.

The camera 171 is configured to collect photographing data.

In specific implementation, when a photo is taken (such as selfie) by using a photographing apparatus such as a mobile phone or a camera, objects before a lens, such as the number of faces, a size of a face, a location of a face on a screen, a facial angle, and the like, can be captured by using the camera 131.

The processor 172 is configured to: parse the photographing data collected by the camera 171 to obtain a first attribute parameter, where the first attribute parameter includes the number of faces and the location of a face on a screen that are collected by the camera; and match the parsed-out first attribute parameter to a second attribute parameter of one or more prestored photographic pose recommendation pictures.

In some feasible implementation manners, the first attribute parameter includes the number of faces and the location of a face on the screen that are collected by the camera. In some other embodiments, the attribute parameter may further include a size of a face in each location and/or a facial angle in each location, and the like.

In specific implementation of this embodiment of the present invention, multiple graceful photographic pose recommendation pictures may be prestored in the photographing apparatus, parameters (the number of included faces, a location of a face on a screen, a size of a face in each location, a facial angle in each location, and the like) in each picture are defined, and the defined parameters are saved as a second attribute parameter of the picture.

In some feasible implementation manners, in the first attribute parameter and/or the second attribute parameter, the location of a face on a screen may be a location scope. For example, the screen may be divided into multiple areas such as upper, lower, left, right and middle areas (for example, as shown in FIG. 2). In another feasible implementation manner, the location of a face on the screen may be specific location coordinates.

Correspondingly, in some feasible implementation manners, in the first attribute parameter and/or the second attribute parameter, the size of a face in each location may be represented by an interval range of the screen. For example, when the location of a face on the screen is a location scope of a divided area, each area of the screen is divided into boxes of multiple sizes, and each box represents an interval range. In this way, a box size may be used to represent the size of a face in each location. For example, as shown in FIG. 3, a middle area of the screen may be divided into five boxes: A1, A2, A3, A4, and A5, whose sizes are in ascending order. Therefore, the size of a face in the middle area location of the screen may be represented by A1, greater than A1 but less than A2, greater than A2 but less than A3, greater than A3 but less than A4, or greater than A4 but less than A5 (the size of the face in FIG. 4 is greater than A2 but less than A3). In some other feasible implementation manners, the size of a face in each location may also be represented by parameters, such as actual length, width, and height.

Correspondingly, in some feasible implementation manners, in the first attribute parameter and/or the second attribute parameter, the facial angle in each location may be an angle value, for example, frontal, full profile, or 45° profile; or the facial angle may be an angle range, for example, frontal, 0-45° left profile, or 0-45° right profile.

Certainly, in specific implementation, the location, size and angle of a face on a screen may also be represented in other manners, which are not enumerated herein exhaustively.

In specific implementation, different matching rules may be set according to different parameter content that is specifically included in the first attribute parameter and the second attribute parameter. A matching sequence of attribute parameter matching performed by the processor 172 and a specific parameter that needs to be matched may be different, and standards for determining whether a preset matching result is met may also be different. For example, when the first attribute parameter and the second attribute parameter include the number of faces and the location of a face on a screen that are collected by the camera, parameters that need to he matched are only the number of faces and the location of a face on the screen. If the number of faces included in the photographing data is the same as the number of faces included in a photographic pose recommendation picture, and if a location of each face in the photographing data is also the same as a location of each face in the photographic pose recommendation picture, it may be determined that a photographic pose recommendation picture is found, where a second attribute parameter of the photographic pose recommendation picture and the first attribute parameter obtained by parsing the photographing data meet a preset matching result. However, when the first attribute parameter and the second attribute parameter include the number of faces, the location of a face on a screen, and the size of a facc in each location that are collected by the camera, parameters that need to be matched by the processor 172 are also the three. If the number of faces included in the photographing data is the same as the number of faces included in a photographic pose recommendation picture, the location of each face in the photographing data is also the same as a location of each face in the photographic pose recommendation picture, and the size of a face in each location in the photographing data is also the same as that in the photographic pose recommendation picture, it may be determined that a photographic pose recommendation picture is found, where a second attribute parameter of the photographic pose recommendation picture and the first attribute parameter obtained by parsing the photographing data meet a preset matching result. In specific implementation, when the location of a face on a screen in the first attribute parameter and/or the second attribute parameter is specific location coordinates, and when matching is performed between the first attribute parameter and the second attribute parameter with regard to the location of a face on the screen, sameness of the location may refer to sameness of specific location coordinates; when the location of a face on a screen in the first attribute parameter and/or the second attribute parameter is a location scope, and when matching is performed between the first attribute parameter and the second attribute parameter with regard to the location of a face on the screen, sameness of the location may refer to being in a same location scope, for example, corresponding to FIG. 2, both being located on the left side, the right side, or the like of the screen. In specific implementation, when the size of a face in each location is represented by an interval range of the screen, and when matching is performed between the first attribute parameter and the second attribute parameter with regard to the size of a face in each location, sameness of the size may refer to being located in a same interval range of the screen. For example, corresponding to FIG. 4 (photographing data collected by the camera) and FIG. 5 (a prestored photographic pose recommendation picture), sameness of the size may refer to being located in a same interval in which the size is greater than A2 but less than A3. When the size of a face in each location is represented by parameters, such as actual length and width or height, and when matching is performed between the first attribute parameter and the second attribute parameter with regard to the size of a face in each location, sameness of the size may refer to sameness of length and width or height.

The display 173 is configured to: when the processor 172 finds a photographic pose recommendation picture, output the photographic pose recommendation picture, so that a user adjusts a photographic pose according to the photographic pose recommendation picture, where an attribute parameter of the photographic pose recommendation picture and the attribute parameter of the photographing data meet a preset matching result.

In some feasible implementation manners, the display 173 may superimpose the photographic pose recommendation picture in a semitransparent manner on the photographing data collected by the camera (as shown in FIG. 5.1, the bold line is the photographing data collected by the camera, and the fine line is the photographic pose recommendation picture). On one hand, interference caused by the photographic pose recommendation picture to the photographing data collected by the camera can be reduced; on the other hand, it is convenient for the user to adjust his/her photographic pose by comparing the two pictures.

In some feasible implementation manners, multiple photographic pose recommendation pictures may meet the matching result. Therefore, when multiple photographic pose recommendation pictures of which attribute parameters match the attribute parameter of the photographing data are found, the display 173 may randomly output one found photographic pose recommendation picture.

In some feasible implementation manners, the processor 172 is specifically configured to: match the number of faces that is obtained by parsing the photographing data to the number of faces included in the one or more prestored photographic pose recommendation pictures; when a photographic pose recommendation picture in which the number of included faces is the same as the parsed-out number of faces is found, determine whether a location of each face on the screen in the photographic pose recommendation picture is the same as the parsed-out location of each face on the screen; and when it is determined that the location of each face on the screen in the photographic pose recommendation picture is the same as the parsed-out location of each face on the screen, determine that a photographic pose recommendation picture is found, where a second attribute parameter of the photographic pose recommendation picture and the first attribute parameter obtained by parsing the photographing data meet a preset matching result.

In specific implementation, the number of faces collected by the camera 171 may be one or more. For example, FIG. 7 shows a viewfinder frame in which the camera collects a single face; and FIG. 8 shows a viewfinder frame in which the camera collects two faces. With reference to FIG. 7 and FIG. 8, the processor 172 is specifically configured to perform matching to determine whether there is a photographic pose recommendation picture including a single face or two faces. Corresponding to the single face in FIG. 7, the photographic pose recommendation picture in FIG. 9 is found, and corresponding to the two faces in FIG. 8, the photographic pose recommendation picture in FIG. 10 is found. After the photographic pose recommendation pictures in which the number of faces is matched, as shown in FIG. 9 and FIG. 10, are found, the processor 171 further determines whether the location of a face on the screen in FIG. 9 is the same as the location of a face on the screen in FIG. 7, and determines whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7. Therefore, for the photographing data in FIG. 7, the processor 172 may determine that a photographic pose recommendation picture is found, where a second attribute parameter of the photographic pose recommendation picture and the first attribute parameter obtained by parsing the photographing data meet a preset matching result.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8. Therefore, for the photographing data in FIG. 8, the processor 172 may determine that a photographic pose recommendation picture is found, where a second attribute parameter of the photographic pose recommendation picture and the first attribute parameter obtained by parsing the photographing data meet a preset matching result.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

In some feasible implementation manners, the first attribute parameter includes the number of faces, the location of a face on the screen, and a size of a face in each location that are collected by the camera; and the processor 172 is specifically configured to: match the number of faces that is obtained by parsing the photographing data to the number of faccs included in the one or more prestored photographic pose recommendation pictures; when a photographic pose recommendation picture in which the number of included faces is the same as the parsed-out number of faces is found, determine whether a location of each face on the screen in the photographic pose recommendation picture is the same as the parsed-out location of each face on the screen; when it is determined that the location of each face on the screen in the photographic pose recommendation picture is the same as the parsed-out location of each face on the screen, determine whether a size of a face in each location in the photographic pose recommendation picture is the same as the parsed-out size of a face in each location; and when it is determined that the size of a face in each location in the photographic pose recommendation picture and the size that is of a face in a same location and obtained by parsing the photographing data fall within a same size range, determine that a photographic pose recommendation picture is found, where a second attribute parameter of the photographic pose recommendation picture and the first attribute parameter obtained by parsing the photographing data meet a preset matching result.

In specific implementation, the number of faces collected by the camera 171 may be one or more. For example, FIG. 7 shows a viewfinder frame in which the camera collects a single face; and FIG. 8 shows a viewfinder frame in which the camera collects two faces. With reference to FIG. 7 and FIG. 8, the processor 172 is configured to perform matching to determine whether there is a photographic pose recommendation picture including a single face or two faces. Corresponding to the single face in FIG. 7, the photographic pose recommendation picture in FIG. 9 is found, and corresponding to the two faces in FIG. 8, the photographic pose recommendation picture in FIG. 10 is found.

Still referring to the examples in FIG. 7 and FIG. 8, after finding the photographic pose recommendation pictures including a single face or two faces, as shown in FIG. 9 and FIG. 10, the processor 172 may further determine whether the location of a face on the screen in FIG. 9 is the same as the location of a face on the screen in FIG. 7, and determine whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Referring to FIG. 3, FIG. 7 and FIG. 9, it can be learned that, according to the matching performed by the processor 172, the size of a single face in FIG. 7 is greater than A2 but less than A3, and the size of a single face in FIG. 9 is also greater than A2 but less than A3. Therefore, the processor 172 may determine that a photographic pose recommendation picture shown in FIG. 9 is found, where an attribute parameter of the photographic pose recommendation picture and the attribute parameter of the photographing data in FIG. 7 meet a preset matching result.

In specific implementation, it is also possible that the photographic pose recommendation picture in FIG. 9 meets a matching requirement of the number of faces and meets a matching requirement of the location but does not meet a matching requirement of the size of a face. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, the processor 172 may determine separately whether sizes of single faces in same locations are the same between FIG. 8 and FIG. 10. If the sizes of single faces are the same, then the processor 172 may determine that a photographic pose recommendation picture is found, where an attribute parameter of the photographic pose recommendation picture and the attribute parameter of the photographing data in FIG. 8 meet a preset matching result. If it is determined that a size of a face in one location in FIG. 8 is the same as a size of a face in a same location in FIG. 10, but a size of a face in another location is different from a size of a face in a same location in FIG. 10, it may be determined that the attribute parameter of the photographic pose recommendation picture in FIG. 10 and the attribute parameter of the photographing data in FIG. 8 do not meet a preset matching result.

In specific implementation, it is also possible that the photographic pose recommendation picture in FIG. 9 meets a matching requirement of the number of faces and meets a matching requirement of the location but does not meet a matching requirement of the size of a face. In this case, the system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

In some feasible implementation manners, the parsed-out attribute parameter includes the number of faces, the location of a face on the screen, and a facial angle in each location that are collected by the camera; therefore, the processor 172 is specifically configured to: match the number of faces that is obtained by parsing the photographing data to the number of faces included in the one or more prestored photographic pose recommendation pictures; when a photographic pose recommendation picture in which the number of included faces is the same as the parsed-out number of faces is found, determine whether a location of each face on the screen in the photographic pose recommendation picture is the same as the parsed-out location of each face on the screen; when it is determined that the location of each face on the screen in the photographic pose recommendation picture is the same as the parsed-out location of each face on the screen, determine whether a facial angle in each location in the photographic pose recommendation picture is the same as the parsed-out facial angle in each location; and when it is determined that the facial angle in each location in the photographic pose recommendation picture is the same as the parsed-out facial angle in each location, determine that a photographic pose recommendation picture is found, where a second attribute parameter of the photographic pose recommendation picture and the parsed-out attribute parameter meet a preset matching result.

In specific implementation, the number of faces collected by the camera 171 may be one or more. For example, FIG. 7 shows a viewfinder frame in which the camera collects a single face; and FIG. 8 shows a viewfinder frame in which the camera collects two faces. With reference to FIG. 7 and FIG. 8, the processor 172 is specifically configured to perform matching to determine whether there is a photographic pose recommendation picture including a single face or two faces. Corresponding to the single face in FIG. 7, the photographic pose recommendation picture in FIG. 9 is found, and corresponding to the two faces in FIG. 8, the photographic pose recommendation picture in FIG. 10 is found.

Still referring to the examples in FIG. 7 and FIG. 8, after finding the photographic pose recommendation picture including a single face or two faces, the processor 172 may further determine whether the location of a face on the screen in FIG. 9 is the same as the location of a face on the screen in FIG. 7, and determine whether the location of each face on the screen in FIG. 10 is the same as the location of each face on the screen in FIG. 8. Referring to FIG. 2, FIG. 7 and FIG. 9, it can be learned that, in the photographing data in FIG. 7, the location of a face on the screen is a middle area; and in the photographic pose recommendation picture in FIG. 9, the location of a face on the screen is also a middle area. It thus can be learned that the location of a single face on the screen in the photographic pose recommendation picture in FIG. 9 is the same as the location of a single face on the screen in the photographing data in FIG. 7.

In specific implementation, it is also possible that the photographic pose recommendation picture in FIG. 9 meets a matching requirement of the number of faces but does not meet a matching requirement of the location. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, referring to FIG. 2.1, FIG. 8 and FIG. 10, it can be learned that the locations of two faces on the screen in FIG. 8 respectively correspond to the locations shown in the diagram on the upper left side of FIG. 2.1, and the locations of two faces on the screen in FIG. 10 also correspond to the locations shown in the diagram on the upper left side of FIG. 2.1. Therefore, both the locations of the two faces on the screen in the photographic pose recommendation picture in FIG. 10 are the same as the locations of the two faces on the screen in the photographing data in FIG. 8.

In specific implementation, it is also possible that the photographic pose recommendation picture in FIG. 10 meets a matching requirement of the number of faces but does not meet a matching requirement of the location. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

Referring to FIG. 7 and FIG. 9, it can be learned that the angle of a single face in FIG. 7 is frontal and the angle of a single face in FIG. 9 is 0-45° right profile. According to determining of the facial angles of faces in FIG. 7 and FIG. 9, the processor 172 may determine that the attribute parameter of the photographic pose recommendation picture in FIG. 9 and the attribute parameter of the photographing data in FIG. 7 do not meet a preset matching result.

In specific implementation, it is also possible that the photographic pose recommendation picture in FIG. 9 meets a matching requirement of the number of faces and meets a matching requirement of the location but does not meet a matching requirement of the facial angle. In this case, a system may determine whether all the prestored photographic pose recommendation pictures have been traversed. If a determining result is no, the system may proceed to invoke a next photographic pose recommendation picture to perform attribute parameter matching between the photographing data in FIG. 7 and the photographic pose recommendation picture until all the prestored photographic pose recommendation pictures are traversed.

Similarly, for FIG. 8 and FIG. 10, the processor 172 may determine separately whether facial angles of single faces in same locations are the same between FIG. 8 and FIG. 10. If the facial angles of single faces are the same, it may be determined that a photographic pose recommendation picture is found, where an attribute parameter of the photographic pose recommendation picture and the attribute parameter of the photographing data in FIG. 8 meet a preset matching result. If it is determined that a facial angle in one location in FIG. 8 is the same as a facial angle in a same location in FIG. 10, but a facial angle in another location is different from a facial angle in a same location in FIG. 10, it may be determined that the attribute parameter of the photographic pose recommendation picture in FIG. 10 and the attribute parameter of the photographing data in FIG. 8 do not meet a preset matching result.

In specific implementation, it is also possible that the photographic pose recommendation picture in FIG. 10 meets a matching requirement of the number of faces and meets a matching requirement of the location but does not meet a matching requirement of the facial angle. In this case, the system may determine whether all the prestored photographic pose recommendation pictures have been traversed. If a determining result is no, the system may proceed to invoke a next photographic pose recommendation picture to perform attribute parameter matching between the photographing data in FIG. 8 and the photographic pose recommendation picture until all the prestored photographic pose recommendation pictures are traversed.

It can be seen from the foregoing that, in some feasible implementation manners, photographing data is collected by using a camera; the collected photographing data is parsed to obtain a first attribute parameter, where the first attribute parameter includes the number of faces, a location of a face on a screen, and a facial angle in each location that are collected by the camera; matching is performed between the parsed-out first attribute parameter and a second attribute parameter of one or more prestored photographic pose recommendation pictures; and when a photographic pose recommendation picture of which a second attribute parameter matches the parsed-out first attribute parameter is found, the found photographic pose recommendation picture is output, so that a user adjusts a photographic pose according to the photographic pose recommendation picture. In this way, a superb photographic pose recommendation picture can be output for a user.

What is described above is merely exemplary embodiments of the present invention. However, the protection scope of the present invention is defined by the appended claims. . Therefore, equivalent variations made according to the claims of the present invention shall fall within the scope of the appended claims.

## Claims

1. A picture outputting method, comprising:
collecting (S110) photographing data by using a camera;
parsing (S111) the collected photographing data to obtain a first attribute parameter, wherein the first attribute parameter comprises the number of faces and a location of a face on a screen;
matching (S112) the parsed-out first attribute parameter to a second attribute parameter of one or more prestored photographic pose recommendation pictures; and
when a photographic pose recommendation picture is found, outputting (S113) the found photographic pose recommendation picture, so that a user adjusts a photographic pose according to the photographic pose recommendation picture, wherein a second attribute parameter of the found photographic pose recommendation picture and the first attribute parameter meet a preset matching result; wherein
the matching the parsed-out first attribute parameter to a second attribute parameter of one or more prestored photographic pose recommendation pictures comprises:
matching the parsed-out number of faces to the number of faces comprised in the one or more prestored photographic pose recommendation pictures;
when a photographic pose recommendation picture in which the number of comprised faces is the same as the parsed-out number of faces is found, determining whether a location of each face on the screen in the photographic pose recommendation picture is the same as the parsed-out location of a face on the screen; and
if a determining result is that the location of each face on the screen in the photographic pose recommendation picture is the same as the parsed-out location of a face on the screen, determining that the photographic pose recommendation picture is found, wherein the second attribute parameter of the found photographic pose recommendation picture and the first attribute parameter meet the preset matching result;
**characterized in** the matching the parsed-out first attribute parameter to a second attribute parameter of one or more prestored photographic pose recommendation pictures further comprising randomly outputting one found photographic pose recommendation picture when multiple photographic pose recommendation pictures of which second attribute parameters match the first attribute parameter are found.

2. The picture outputting method according to claim 1, wherein the first attribute parameter further comprises: a size of a face in each location, and the matching the parsed-out first attribute parameter to a second attribute parameter of one or more prestored photographic pose recommendation pictures comprises:
matching the parsed-out number of faces to the number of faces comprised in the one or more prestored photographic pose recommendation pictures;
when a photographic pose recommendation picture in which the number of comprised faces is the same as the parsed-out number of faces is found, determining whether a location of each face on the screen in the photographic pose recommendation picture is the same as the parsed-out location of a face on the screen; and
if a determining result is that the location of each face on the screen in the photographic pose recommendation picture is the same as the parsed-out location of a face on the screen, determining whether a size of a face in each location in the photographic pose recommendation picture is the same as the parsed-out size of a face in each location, and if a determining result is that the size of a face in each location in the photographic pose recommendation picture is the same as the parsed-out size of a face in each location, determining that the photographic pose recommendation picture is found, wherein the second attribute parameter of the found photographic pose recommendation picture and the first attribute parameter meet the preset matching result.

3. The picture outputting method according to claim 1, wherein the first attribute parameter further comprises: a facial angle in each location, and the matching the parsed-out first attribute parameter to a second attribute parameter of one or more prestored photographic pose recommendation pictures comprises:
matching the parsed-out number of faces to the number of faces comprised in the one or more prestored photographic pose recommendation pictures;
when a photographic pose recommendation picture in which the number of comprised faces is the same as the parsed-out number of faces is found, determining whether a location of each face on the screen in the photographic pose recommendation picture is the same as the parsed-out location of a face on the screen; and
if a determining result is that the location of each face on the screen in the photographic pose recommendation picture is the same as the parsed-out location of a face on the screen, determining whether a facial angle in each location in the photographic pose recommendation picture is the same as the parsed-out facial angle in each location, and if a determining result is that the facial angle in each location in the photographic pose recommendation picture is the same as the parsed-out facial angle in each location, determining that the photographic pose recommendation picture is found, wherein the second attribute parameter of the found photographic pose recommendation picture and the first attribute parameter meet the preset matching result.

4. The picture outputting method according to any one of claims 1 to 3, wherein the outputting the found photographic pose recommendation picture comprises:
superimposing the found photographic pose recommendation picture in a semitransparent manner on the photographing data collected by the camera.

5. A picture outputting apparatus, comprising:
a photographing module (131), configured to collect photographing data;
a parsing module (132), configured to parse the photographing data collected by the photographing module to obtain a first attribute parameter, wherein the first attribute parameter comprises the number of faces and a location of a face on a screen;
a matching module (133), configured to match the first attribute parameter parsed out by the parsing module to a second attribute parameter of one or more prestored photographic pose recommendation pictures; and
a display output module (134), configured to: when the matching module finds a photographic pose recommendation picture, output the found photographic pose recommendation picture, so that a user adjusts a photographic pose according to the photographic pose recommendation picture, wherein a second attribute parameter of the found photographic pose recommendation picture and the first attribute parameter meet a preset matching result; wherein
the matching module comprises:
a first matching submodule (1331), configured to match the parsed-out number of faces to the number of faces comprised in the one or more prestored photographic pose recommendation pictures;
a second matching submodule (1332), configured to: when the first matching submodule finds a photographic pose recommendation picture in which the number of comprised faces is the same as the parsed-out number of faces, determine whether a location of each face on the screen in the photographic pose recommendation picture is the same as the parsed-out location of a face on the screen; and
a first determining submodule (1333), configured to: when a determining result of the second matching submodule is that the location of each face on the screen in the photographic pose recommendation picture is the same as the parsed-out location of a face on the screen, determine that the photographic pose recommendation picture is found, wherein the second attribute parameter of the found photographic pose recommendation picture and the first attribute parameter meet the preset matching result;
**characterized in that**
the display output module is specifically configured to randomly output one found photographic pose recommendation picture when the matching module finds multiple photographic pose recommendation pictures of which second attribute parameters match the first attribute parameter.

6. The picture outputting apparatus according to claim 5, wherein the first attribute parameter further comprises: a size of a face in each location; and the matching module comprises:
a first matching submodule, configured to match the parsed-out number of faces to the number of faces comprised in the one or more prestored photographic pose recommendation pictures;
a second matching submodule, configured to: when the first matching submodule finds a photographic pose recommendation picture in which the number of comprised faces is the same as the parsed-out number of faces, determine whether a location of each face on the screen in the photographic pose recommendation picture is the same as the parsed-out location of a face on the screen;
a third matching submodule, configured to: when a determining result of the second matching submodule is that the location of each face on the screen in the photographic pose recommendation picture is the same as the parsed-out location of a face on the screen, determine whether a size of a face in each location in the photographic pose recommendation picture is the same as the parsed-out size of a face in each location; and
a second determining submodule, configured to: when a determining result of the third matching module is that the size of a face in each location in the photographic pose recommendation picture is the same as the parsed-out size of a face in each location, determine that the photographic pose recommendation picture is found, wherein the second attribute parameter of the found photographic pose recommendation picture and the first attribute parameter meet the preset matching result.

7. The picture outputting apparatus according to claim 5, wherein the first attribute parameter further comprises: a facial angle in each location; and the matching module comprises:
a first matching submodule, configured to match the parsed-out number of faces to the number of faces comprised in the one or more prestored photographic pose recommendation pictures;
a second matching submodule, configured to: when the first matching submodule finds a photographic pose recommendation picture in which the number of comprised faces is the same as the parsed-out number of faces, determine whether a location of each face on the screen in the photographic pose recommendation picture is the same as the parsed-out location of a face on the screen;
a fourth matching submodule, configured to: when a determining result of the second matching submodule is that the location of each face on the screen in the photographic pose recommendation picture is the same as the parsed-out location of a face on the screen, determine whether a facial angle in each location in the photographic pose recommendation picture is the same as the parsed-out facial angle in each location; and
a third determining submodule, configured to: when a determining result of the fourth matching submodule is that the facial angle in each location in the photographic pose recommendation picture is the same as the parsed-out facial angle in each location, determine that the photographic pose recommendation picture is found, wherein the second attribute parameter of the found photographic pose recommendation picture and the first attribute parameter meet the preset matching result.

8. The picture outputting apparatus according to any one of claims 5 to 7, wherein the display output module specifically superimposes the found photographic pose recommendation picture in a semitransparent manner on the photographing data collected by the photographing module.

## Patentansprüche

1. Bildausgabeverfahren, umfassend:
Sammeln (S110) von Fotografiedaten durch Verwenden einer Kamera;
Parsen (S111) der gesammelten Fotografiedaten, um einen ersten Attributparameter zu erhalten, wobei der erste Attributparameter die Anzahl von Gesichtern und eine Position eines Gesichts auf einem Bildschirm umfasst;
Abgleichen (S112) des ausgeparsten ersten Attributparameters mit einem zweiten Attributparameter von einem oder mehreren vorgespeicherten Empfehlungsbildern einer fotografischen Pose; und
wenn ein Empfehlungsbild der fotografischen Pose gefunden wird, Ausgeben (S113) des gefundenen Empfehlungsbildes der fotografischen Pose derart, dass ein Benutzer eine fotografische Pose gemäß dem Empfehlungsbild der fotografischen Pose anpasst, wobei ein zweiter Attributparameter des gefundenen Empfehlungsbildes der fotografischen Pose und der erste Attributparameter ein voreingestelltes Abgleichungsergebnis erfüllen; wobei
das Abgleichen des ausgeparsten ersten Attributparameters mit einem zweiten Attributparameter eines oder mehrerer vorgespeicherter Empfehlungsbilder der fotografischen Pose umfasst:
Abgleichen der ausgeparsten Anzahl von Gesichtern mit der Anzahl von Gesichtern, die in den einen oder mehreren vorgespeicherten Empfehlungsbildern der fotografischen Pose enthalten sind;
wenn ein Empfehlungsbild der fotografischen Pose, in dem die Anzahl der enthaltenen Gesichter die gleiche wie die ausgeparste Anzahl von Gesichtern ist, gefunden ist, Bestimmen, ob eine Position jedes Gesichts auf dem Bildschirm in dem Empfehlungsbild der fotografischen Pose die gleiche wie die ausgeparste Position eines Gesichts auf dem Bildschirm ist; und
falls ein Bestimmungsergebnis ist, dass die Position jedes Gesichts auf dem Bildschirm in dem Empfehlungsbild der fotografischen Pose die gleiche wie die ausgeparste Position eines Gesichts auf dem Bildschirm ist, Bestimmen, dass das Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen;
**gekennzeichnet durch** das Abgleichen des ausgeparsten ersten Attributparameters mit einem zweiten Attributparameter von einem oder mehreren vorgespeicherten Empfehlungsbildern der fotografischen Pose,
ferner umfassend das zufällige Ausgeben eines gefundenen Empfehlungsbildes der fotografischen Pose, wenn mehrere Empfehlungsbilder der fotografischen Pose, von denen zweite Attributparameter mit dem ersten Attributparameter abgeglichen sind, gefunden werden.

2. Bildausgabeverfahren nach Anspruch 1, wobei der erste Attributparameter ferner umfasst: eine Größe eines Gesichts an jeder Position, und das Abgleichen des ausgeparsten ersten Attributparameters mit einem zweiten Attributparameter eines oder mehrerer vorgespeicherter Empfehlungsbilder der fotografischen Pose umfasst:
Abgleichen der ausgeparsten Anzahl von Gesichtern mit der Anzahl von Gesichtern, die in den einen oder mehreren vorgespeicherten Empfehlungsbildern der fotografischen Pose enthalten sind;
wenn ein Empfehlungsbild der fotografischen Pose, in dem die Anzahl der enthaltenen Gesichter die gleiche wie die ausgeparste Anzahl von Gesichtern ist, gefunden ist, Bestimmen, ob eine Position jedes Gesichts auf dem Bildschirm in dem Empfehlungsbild der fotografischen Pose die gleiche wie die ausgeparste Position eines Gesichts auf dem Bildschirm ist; und
falls ein Bestimmungsergebnis ist, dass die Position jedes Gesichts auf dem Bildschirm in dem Empfehlungsbild der fotografischen Pose die gleiche wie die ausgeparste Position eines Gesichts auf dem Bildschirm ist, Bestimmen, ob eine Größe eines Gesichts an jeder Position in dem Empfehlungsbild der fotografischen Pose die gleiche wie die ausgeparste Größe eines Gesichts an jeder Position ist, und falls ein Bestimmungsergebnis ist, dass die Größe eines Gesichts an jeder Position in dem Empfehlungsbild der fotografischen Pose die gleiche wie die ausgeparste Größe von einem Gesicht an jeder Position ist, Bestimmen, dass das Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen.

3. Bildausgabeverfahren nach Anspruch 1, wobei der erste Attributparameter ferner umfasst: einen Gesichtswinkel an jeder Position, und das Abgleichen des ausgeparsten ersten Attributparameters mit einem zweiten Attributparameter eines oder mehrerer vorgespeicherter Empfehlungsbilder der fotografischen Pose umfasst:
Abgleichen der ausgeparsten Anzahl von Gesichtern mit der Anzahl von Gesichtern, die in den einen oder mehreren vorgespeicherten Empfehlungsbildern der fotografischen Pose enthalten sind;
wenn ein Empfehlungsbild der fotografischen Pose, in dem die Anzahl der enthaltenen Gesichter die gleiche wie die ausgeparste Anzahl von Gesichtern ist, gefunden ist, Bestimmen, ob eine Position jedes Gesichts auf dem Bildschirm in dem Empfehlungsbild der fotografischen Pose die gleiche wie die ausgeparste Position eines Gesichts auf dem Bildschirm ist; und
falls ein Bestimmungsergebnis ist, dass die Position jedes Gesichts auf dem Bildschirm in dem Empfehlungsbild der fotografischen Pose die gleiche wie die ausgeparste Position eines Gesichts auf dem Bildschirm ist, Bestimmen, ob ein Gesichtswinkel an jeder Position in dem Empfehlungsbild der fotografischen Pose der gleiche wie der ausgeparste Gesichtswinkel an jeder Position ist, und falls ein Bestimmungsergebnis ist, dass der Gesichtswinkel an jeder Position in dem Empfehlungsbild der fotografischen Pose der gleiche wie der ausgeparste Gesichtswinkel an jeder Position ist, Bestimmen, dass ein Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen.

4. Bildausgabeverfahren nach einem der Ansprüche 1 bis 3, wobei das Ausgeben des gefundenen Empfehlungsbildes der fotografischen Pose umfasst:
Überlagern des gefundenen Empfehlungsbildes der fotografischen Pose auf eine teildurchlässige Weise auf die durch die Kamera gesammelten Fotografiedaten.

5. Bildausgabeeinrichtung, umfassend:
ein Fotografiemodul (131), das konfiguriert ist, um Fotografiedaten zu sammeln;
ein Parsing-Modul (132), das konfiguriert ist, um die durch das Fotografiemodul gesammelten Fotografiedaten zu parsen, um einen ersten Attributparameter zu erhalten, wobei der erste Attributparameter die Anzahl von Gesichtern und eine Position eines Gesichts auf einem Bildschirm umfasst;
ein Abgleichungsmodul (133), das konfiguriert ist, um den ersten Attributparameter, der durch das Parsing-Modul ausgeparst wird, mit einem zweiten Attributparameter eines oder mehrerer vorgespeicherter Empfehlungsbilder der fotografischen Pose abzugleichen; und
ein Anzeigeausgabemodul (134), das konfiguriert ist, um: wenn das Abgleichungsmodul ein Empfehlungsbild der fotografischen Pose findet, das gefundene Empfehlungsbild der fotografischen Pose derart auszugeben, dass ein Benutzer eine fotografische Pose gemäß dem Empfehlungsbild der fotografischen Pose anpasst, wobei ein zweiter Attributparameter des gefundenen Empfehlungsbildes der fotografischen Pose und der erste Attributparameter ein voreingestelltes Abgleichungsergebnis erfüllen; wobei
das Abgleichungsmodul umfasst:
ein erstes Abgleichungssubmodul (1331), das konfiguriert ist, um die ausgeparste Anzahl von Gesichtern mit der Anzahl von Gesichtern abzugleichen, die in den einen oder mehreren vorgespeicherten Empfehlungsbildern der fotografischen Pose enthalten sind;
ein zweites Abgleichungssubmodul (1332), das konfiguriert ist, um: wenn das erste Abgleichungssubmodul ein Empfehlungsbild der fotografischen Pose findet, in dem die Anzahl der enthaltenen Gesichter die gleiche wie die ausgeparste Anzahl von Gesichtern ist, zu bestimmen, ob eine Position jedes Gesichts auf dem Bildschirm in dem Empfehlungsbild der fotografischen Pose die gleiche wie die ausgeparste Position eines Gesichts auf dem Bildschirm ist; und
ein erstes Bestimmungssubmodul (1333), das konfiguriert ist, um: wenn ein Bestimmungsergebnis des zweiten Abgleichungssubmoduls ist, dass die Position jedes Gesichts auf dem Bildschirm in dem Empfehlungsbild der fotografischen Pose die gleiche wie die ausgeparste Position eines Gesichts auf dem Bildschirm ist, zu bestimmen, dass das Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen;
**dadurch gekennzeichnet, dass**
das Anzeigeausgabemodul speziell konfiguriert ist, um ein gefundenes Empfehlungsbild der fotografischen Pose zufällig auszugeben, wenn das Abgleichungsmodul mehrere Empfehlungsbilder der fotografischen Pose findet, von denen zweite Attributparameter mit dem ersten Attributparameter abgeglichen sind.

6. Bildausgabeeinrichtung nach Anspruch 5, wobei der erste Attributparameter ferner umfasst: eine Größe eines Gesichts an jeder Position; und das Abgleichungsmodul umfasst:
ein erstes Abgleichungssubmodul, das konfiguriert ist, um die ausgeparste Anzahl von Gesichtern mit der Anzahl von Gesichtern abzugleichen, die in den einen oder mehreren vorgespeicherten Empfehlungsbildern der fotografischen Pose enthalten sind;
ein zweites Abgleichungssubmodul, das konfiguriert ist, um: wenn das erste Abgleichungssubmodul ein Empfehlungsbild der fotografischen Pose findet, in dem die Anzahl der enthaltenen Gesichter die gleiche wie die ausgeparste Anzahl von Gesichtern ist, zu bestimmen, ob eine Position jedes Gesichts auf dem Bildschirm in dem Empfehlungsbild der fotografischen Pose die gleiche wie die ausgeparste Position eines Gesichts auf dem Bildschirm ist;
ein drittes Abgleichungssubmodul, das konfiguriert ist, um: wenn ein Bestimmungsergebnis des zweiten Abgleichungssubmoduls ist, dass die Position jedes Gesichts auf dem Bildschirm in dem Empfehlungsbild der fotografischen Pose die gleiche wie die ausgeparste Position eines Gesichts auf dem Bildschirm ist, zu bestimmen, ob eine Größe eines Gesichts an jeder Position in dem Empfehlungsbild der fotografischen Pose die gleiche wie die ausgeparste Größe eines Gesichts an jeder Position ist; und
ein zweites Bestimmungssubmodul, das konfiguriert ist, um: wenn ein Bestimmungsergebnis des dritten Abgleichungsmoduls ist, dass die Größe eines Gesichts an jeder Position in dem Empfehlungsbild der fotografischen Pose die gleiche wie die ausgeparste Größe eines Gesichts an jeder Position ist, zu bestimmen, dass das Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen.

7. Bildausgabeeinrichtung nach Anspruch 5, wobei der erste Attributparameter ferner umfasst: einen Gesichtswinkel an jeder Position; und das Abgleichungsmodul umfasst:
ein erstes Abgleichungssubmodul, das konfiguriert ist, um die ausgeparste Anzahl von Gesichtern mit der Anzahl von Gesichtern abzugleichen, die in den einen oder mehreren vorgespeicherten Empfehlungsbildern der fotografischen Pose enthalten sind;
ein zweites Abgleichungssubmodul, das konfiguriert ist, um: wenn das erste Abgleichungssubmodul ein Empfehlungsbild der fotografischen Pose findet, in dem die Anzahl der enthaltenen Gesichter die gleiche wie die ausgeparste Anzahl von Gesichtern ist, zu bestimmen, ob eine Position jedes Gesichts auf dem Bildschirm in dem Empfehlungsbild der fotografischen Pose die gleiche wie die ausgeparste Position eines Gesichts auf dem Bildschirm ist;
ein viertes Abgleichungssubmodul, das konfiguriert ist, um: wenn ein Bestimmungsergebnis des zweiten Abgleichungssubmoduls ist, dass die Position jedes Gesichts auf dem Bildschirm in dem Empfehlungsbild der fotografischen Pose die gleiche wie die ausgeparste Position eines Gesichts auf dem Bildschirm ist, zu bestimmen, ob ein Gesichtswinkel an jeder Position in dem Empfehlungsbild der fotografischen Pose der gleiche wie der ausgeparste Gesichtswinkel an jeder Position ist; und
ein drittes Bestimmungssubmodul, das konfiguriert ist, um: wenn ein Bestimmungsergebnis des vierten Abgleichungssubmoduls, ist, dass der Gesichtswinkel an jeder Position in dem Empfehlungsbild der fotografischen Pose der gleiche wie der ausgeparste Gesichtswinkel an jeder Position ist, zu bestimmen, dass das Empfehlungsbild der fotografischen Pose gefunden ist, wobei der zweite Attributparameter des gefundenen Empfehlungsbildes der fotografischen Pose und der erste Attributparameter das voreingestellte Abgleichungsergebnis erfüllen.

8. Bildausgabeeinrichtung nach einem der Ansprüche 5 bis 7, wobei das Anzeigeausgabemodul das gefundene Empfehlungsbild der fotografischen Pose auf eine teildurchlässige Weise auf die durch das Fotografiemodul gesammelten Fotografiedaten speziell überlagert.

## Revendications

1. Procédé de production d'image, comprenant :
la collecte (S110) de données de photographie à l'aide d'un appareil photo ;
l'analyse (S111) des données de photographie collectées afin d'obtenir un premier paramètre d'attribut, dans lequel le premier paramètre d'attribut comprend le nombre de visages et un emplacement d'un visage sur un écran ;
la mise en correspondance (S112) du premier paramètre d'attribut analysé avec un second paramètre d'attribut d'une ou plusieurs images de recommandation de pose photographique préenregistrées ; et
lorsqu'une image de recommandation de pose photographique est trouvée, la production (S113) de l'image de recommandation de pose photographique trouvée, de sorte qu'un utilisateur ajuste une pose photographique selon l'image de recommandation de pose photographique, dans lequel un second paramètre d'attribut de l'image de recommandation de pose photographique trouvée et le premier paramètre d'attribut satisfont à un résultat de correspondance prédéfini ; dans lequel
la mise en correspondance du premier paramètre d'attribut analysé avec un second paramètre d'attribut d'une ou plusieurs images de recommandation de pose photographique préenregistrées comprend :
la mise en correspondance du nombre analysé de visages avec le nombre de visages compris dans la ou les images de recommandation de pose photographique préenregistrées ;
lorsqu'une image de recommandation de pose photographique dans laquelle le nombre de visages compris est le même que le nombre analysé de visages est trouvée, le fait de déterminer si un emplacement de chaque visage sur l'écran dans l'image de recommandation de pose photographique est le même que l'emplacement analysé d'un visage sur l'écran ; et
si un résultat de détermination est que l'emplacement de chaque visage sur l'écran dans l'image de recommandation de pose photographique est le même que l'emplacement analysé d'un visage sur l'écran, le fait de déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini ;
**caractérisé en ce que** la mise en correspondance du premier paramètre d'attribut analysé avec un second paramètre d'attribut d'une ou plusieurs images de recommandation de pose photographique préenregistrées comprend en outre la production aléatoire d'une image de recommandation de pose photographique trouvée lorsque plusieurs images de recommandation de pose photographique dont les seconds paramètres d'attribut correspondent au premier paramètre d'attribut sont trouvées.

2. Procédé de production d'image selon la revendication 1, dans lequel le premier paramètre d'attribut comprend en outre : une taille d'un visage à chaque emplacement, et la mise en correspondance du premier paramètre d'attribut analysé avec un second paramètre d'attribut d'une ou plusieurs images de recommandation de pose photographique préenregistrées comprend :
la mise en correspondance du nombre analysé de visages avec le nombre de visages compris dans la ou les images de recommandation de pose photographique préenregistrées ;
lorsqu'une image de recommandation de pose photographique dans laquelle le nombre de visages compris est le même que le nombre analysé de visages est trouvée, le fait de déterminer si un emplacement de chaque visage sur l'écran dans l'image de recommandation de pose photographique est le même que l'emplacement analysé d'un visage sur l'écran ; et
si un résultat de détermination est que l'emplacement de chaque visage sur l'écran dans l'image de recommandation de pose photographique est le même que l'emplacement analysé d'un visage sur l'écran, le fait de déterminer si une taille d'un visage à chaque emplacement dans l'image de recommandation de pose photographique est la même que la taille analysée d'un visage à chaque emplacement, et si un résultat de détermination est que la taille d'un visage à chaque emplacement dans l'image de recommandation de pose photographique est la même que la taille analysée d'un visage à chaque emplacement, le fait de déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini.

3. Procédé de production d'image selon la revendication 1, dans lequel le premier paramètre d'attribut comprend en outre : un angle de visage à chaque emplacement, et la mise en correspondance du premier paramètre d'attribut analysé avec un second paramètre d'attribut d'une ou plusieurs images de recommandation de pose photographique préenregistrées comprend :
la mise en correspondance du nombre analysé de visages avec le nombre de visages compris dans la ou les images de recommandation de pose photographique préenregistrées ;
lorsqu'une image de recommandation de pose photographique dans laquelle le nombre de visages compris est le même que le nombre analysé de visages est trouvée, le fait de déterminer si un emplacement de chaque visage sur l'écran dans l'image de recommandation de pose photographique est le même que l'emplacement analysé d'un visage sur l'écran ; et
si un résultat de détermination est que l'emplacement de chaque visage sur l'écran dans l'image de recommandation de pose photographique est le même que l'emplacement analysé d'un visage sur l'écran, le fait de déterminer si un angle de visage à chaque emplacement dans l'image de recommandation de pose photographique est le même que l'angle de visage analysé à chaque emplacement, et si un résultat de détermination est que l'angle de visage à chaque emplacement dans l'image de recommandation de pose photographique est le même que l'angle de visage analysé à chaque emplacement, le fait de déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini.

4. Procédé de production d'image selon l'une quelconque des revendications 1 à 3, dans lequel la production de l'image de recommandation de pose photographique trouvée comprend :
la superposition de l'image de recommandation de pose photographique trouvée d'une manière semi-transparente sur les données de photographie collectées par l'appareil photo.

5. Appareil de production d'image, comprenant :
un module de photographie (131), configuré pour collecter des données de photographie ;
un module d'analyse (132), configuré pour analyser les données de photographie collectées par le module de photographie afin d'obtenir un premier paramètre d'attribut, dans lequel le premier paramètre d'attribut comprend le nombre de visages et un emplacement d'un visage sur un écran ;
un module de correspondance (133), configuré pour faire correspondre le premier paramètre d'attribut analysé par le module d'analyse avec un second paramètre d'attribut d'une ou plusieurs images de recommandation de pose photographique préenregistrées ; et
un module de production d'affichage (134), configuré pour : lorsque le module de correspondance trouve une image de recommandation de pose photographique, produire l'image de recommandation de pose photographique trouvée, de sorte qu'un utilisateur ajuste une pose photographique selon l'image de recommandation de pose photographique, dans lequel un second paramètre d'attribut de l'image de recommandation de pose photographique trouvée et le premier paramètre d'attribut satisfont à un résultat de correspondance prédéfini ; dans lequel
le module de correspondance comprend :
un premier sous-module de correspondance (1331), configuré pour faire correspondre le nombre analysé de visages avec le nombre de visages compris dans la ou les images de recommandation de pose photographique préenregistrées ;
un deuxième sous-module de correspondance (1332), configuré pour : lorsque le premier sous-module de correspondance trouve une image de recommandation de pose photographique dans laquelle le nombre de visages compris est le même que le nombre analysé de visages, déterminer si un emplacement de chaque visage sur l'écran dans l'image de recommandation de pose photographique est le même que l'emplacement analysé d'un visage sur l'écran ; et
un premier sous-module de détermination (1333), configuré pour : lorsqu'un résultat de détermination du deuxième sous-module de correspondance est que l'emplacement de chaque visage sur l'écran dans l'image de recommandation de pose photographique est le même que l'emplacement analysé d'un visage sur l'écran, déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini ;
**caractérisé en ce que** le module de production d'affichage est spécifiquement configuré pour produire de manière aléatoire une image de recommandation de pose photographique trouvée lorsque le module de correspondance trouve plusieurs images de recommandation de pose photographique dont les seconds paramètres d'attribut correspondent au premier paramètre d'attribut.

6. Appareil de production d'image selon la revendication 5, dans lequel le premier paramètre d'attribut comprend en outre : une taille d'un visage à chaque emplacement ; et le module de correspondance comprend :
un premier sous-module de correspondance, configuré pour faire correspondre le nombre analysé de visages avec le nombre de visages compris dans la ou les images de recommandation de pose photographique préenregistrées ;
un deuxième sous-module de correspondance, configuré pour : lorsque le premier sous-module de correspondance trouve une image de recommandation de pose photographique dans laquelle le nombre de visages compris est le même que le nombre analysé de visages, déterminer si un emplacement de chaque visage sur l'écran dans l'image de recommandation de pose photographique est le même que l'emplacement analysé d'un visage sur l'écran ;
un troisième sous-module de correspondance, configuré pour : lorsqu'un résultat de détermination du deuxième sous-module de correspondance est que l'emplacement de chaque visage sur l'écran dans l'image de recommandation de pose photographique est le même que l'emplacement analysé d'un visage sur l'écran, déterminer si une taille d'un visage à chaque emplacement dans l'image de recommandation de pose photographique est la même que la taille analysée d'un visage à chaque emplacement ; et
un deuxième sous-module de détermination, configuré pour : lorsqu'un résultat de détermination du troisième module de correspondance est que la taille d'un visage à chaque emplacement dans l'image de recommandation de pose photographique est la même que la taille analysée d'un visage à chaque emplacement, déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini.

7. Appareil de production d'image selon la revendication 5, dans lequel le premier paramètre d'attribut comprend en outre : un angle de visage à chaque emplacement ; et le module de correspondance comprend :
un premier sous-module de correspondance, configuré pour faire correspondre le nombre analysé de visages avec le nombre de visages compris dans la ou les images de recommandation de pose photographique préenregistrées ;
un deuxième sous-module de correspondance, configuré pour : lorsque le premier sous-module de correspondance trouve une image de recommandation de pose photographique dans laquelle le nombre de visages compris est le même que le nombre analysé de visages, déterminer si un emplacement de chaque visage sur l'écran dans l'image de recommandation de pose photographique est le même que l'emplacement analysé d'un visage sur l'écran ;
un quatrième sous-module de correspondance, configuré pour : lorsqu'un résultat de détermination du deuxième sous-module de correspondance est que l'emplacement de chaque visage sur l'écran dans l'image de recommandation de pose photographique est le même que l'emplacement analysé d'un visage sur l'écran, déterminer si un angle de visage à chaque emplacement dans l'image de recommandation de pose photographique est le même que l'angle de visage analysé à chaque emplacement ; et
un troisième sous-module de détermination, configuré pour : lorsqu'un résultat de détermination du quatrième sous-module de correspondance est que l'angle de visage à chaque emplacement dans l'image de recommandation de pose photographique est le même que l'angle de visage analysé à chaque emplacement, déterminer que l'image de recommandation de pose photographique est trouvée, dans lequel le second paramètre d'attribut de l'image de recommandation de pose photographique trouvée et le premier paramètre d'attribut satisfont au résultat de correspondance prédéfini.

8. Appareil de production d'image selon l'une quelconque des revendications 5 à 7, dans lequel le module de production d'affichage superpose spécifiquement l'image de recommandation de pose photographique trouvée d'une manière semi-transparente sur les données de photographie collectées par le module de photographie.
